# EUROPEAN PATENT SPECIFICATION

(11) **EP 3 235 714 B1**
(45) Date of publication and mention of the grant of the patent: **15.05.2019**
(21) Application number: 15870099.7
(22) Date of filing: 18.12.2015
(51) Int. Cl.: B62M 7/02, B62J 23/00, F01N 3/24, F01N 3/28, F01N 13/08, F01N 3/10, F01N 13/00, F01N 3/20, F01N 13/10, F01N 13/14

(54) **SADDLE-RIDE VEHICLE**
SATTELFAHRZEUG
VÉHICULE À SELLE

(30) Priority: 19.12.2014 JP 2014256983; 19.12.2014 JP 2014256984; 19.12.2014 JP 2014256985; 06.04.2015 JP 2015077744; 07.08.2015 JP 2015157520
(43) Date of publication of application: 25.10.2017
(73) Proprietor: Yamaha Hatsudoki Kabushiki Kaisha, Iwata-shi, Shizuoka 438-8501 (JP)
(72) Inventor: TAKASU, Daisuke, Iwata-shi Shizuoka 438-8501 (JP); KOBAYASHI, Makoto, Iwata-shi Shizuoka 438-8501 (JP); WAKIMURA, Makoto, Iwata-shi Shizuoka 438-8501 (JP); OKU, Yuji, Iwata-shi Shizuoka 438-8501 (JP)
(74) Representative: Stöckeler, Ferdinand
(86) International application number: PCT/JP2015/085570
(87) International publication number: WO 2016/098900

(56) References cited:
- EP-A1- 1 710 411
- EP-A1- 1 933 010
- EP-A1- 2 463 187
- JP-A- H03 286 122
- JP-A- H05 302 518
- JP-A- 2007 040 250
- JP-A- 2009 035 108
- JP-A- 2011 074 801
- JP-A- 2011 201 466
- JP-A- 2012 121 418
- US-A1- 2011 073 399

## Description

### [Technical Field]

The present invention relates to a straddled vehicle.

### [Background Art]

Patent Literature 1, for example, discloses a straddled vehicle including an engine unit and a vehicle body cover covering a part of a lower portion of the engine unit. The engine unit described in Patent Literature 1 includes a catalyst portion provided below an engine main body. A catalyst configured to purify the exhaust gas is provided inside the catalyst portion. In general, the catalyst has a high temperature during the running of the engine unit. Accordingly, vehicle parts provided near the catalyst portion are more likely to be affected by the heat of the catalyst portion. In the arrangement of Patent Literature 1, the vehicle parts near the catalyst portion include the vehicle body cover. The vehicle body cover of Patent Literature 1 therefore has an opening through which a part of the catalyst portion is exposed. This reduces the effect of the heat, i.e., thermal effect, on the vehicle body cover.

### [Citation List]

### [Patent Literatures]

[Patent Literature 1] Japanese Unexamined Patent Publication No. 2007-45291

### [Summary of Invention]

### [Technical Problem]

In recent years there has been an increasing demand to shorten the period of time required to activate a deactivated catalyst (hereinafter, this time may be referred to as a "time for activation of the catalyst") at a cold start of an engine unit, to improve the exhaust gas purification performance of the catalyst. One of possible approaches to shorten the time for activation of the catalyst is to reduce the path length from a combustion chamber in an engine main body to a catalyst portion. As a result of the reduction of the path length, the exhaust gas at a higher temperature flows into the catalyst. This shortens the time for activation of the catalyst. However, introduction of the exhaust gas at such a higher temperature may further increase the temperature of the activated catalyst. This further heightens concerns over the thermal effect on the vehicle parts provided near the catalyst portion. In addition, the higher temperature of the catalyst may cause deterioration of the catalyst such as sintering, which is a new problem.

EP 1 933 010 A1 describes a straddle type vehicle having an engine disposed between front and rear wheels, and first and second catalytic converters disposed in an exhaust conduit. A secondary air inducting conduit is provided for supplying secondary air to the exhaust conduit at a position between the first and second catalytic converters. A part of the secondary air inducting conduit is exposed at least either forward or sideward in the vehicle in the rear of the front wheel to form a secondary air cooling conduit.

EP 2 463 187 A1 relates to a saddle riding type vehicle mounted with a forwardly inclined cylinder that can easily ensure a clearance between a front wheel and an under guard, while protecting a catalytic device and an exhaust system. The saddle riding type vehicle includes: a vehicle body frame; an engine; and a catalytic device. A catalyst cover is disposed on the vehicle body frame in a space between a front wheel the catalytic device for covering a front portion of the catalytic device from a front downward direction.

JP 2009-035108 A describes a motorbike furnished with a cowling extended to a rear while expanding in the left and right directions from a front surface of an engine arranged between a front wheel and a rear wheel. An opening for accessing a catalyst is provided in the cowling, and the opening is covered with a cover body free to connect and disconnect and a heat insulation plate is adhered on an inner surface of the cover body.

EP 1 710 411 A1 describes an exhaust system of an engine of a motorcycle, which includes an exhaust pipe configured to extend in one of an upward direction and a downward direction from an exhaust port and to then be bent to extend in an opposite direction to form a bent portion at a location in front of the engine.

US 2011(073399 A1 describes a structure for mounting an evaporated fuel treatment device including a canister for a saddle-type vehicle. The canister and a catalyst are arranged below the engine and inside an under cowl.

An object of the present invention is to provide a straddled vehicle capable of shortening the period of time required to activate a deactivated catalyst, and minimizing: a thermal effect on vehicle parts provided near a catalyst portion; and deterioration of the catalyst.

### [Solution to Problem and Advantageous Effects]

An engine main body has, through its front surface, an exhaust port through which the exhaust gas is discharged. The present inventors first conceived an arrangement in which a catalyst portion is provided in front of the engine main body, to reduce the path length from a combustion chamber to the catalyst portion. In this arrangement, the exhaust gas at a higher temperature flows into the catalyst portion. This shortens the time for activation of the catalyst. In the above arrangement in which the catalyst portion is provided in front of the engine main body, the catalyst portion would be directly subjected to airflow during the running of the vehicle. Because the catalyst portion is subjected to airflow, too much increase in temperature of the catalyst portion is prevented. This enables minimization of the thermal effect on vehicle parts provided near the catalyst portion, and minimization of the deterioration of the catalyst portion due to the heat of the catalyst. However, if the catalyst portion is directly subjected to airflow for a long time, the temperature of the catalyst portion may drop too low. This causes a possibility that the activated catalyst is deactivated as a result of a long duration of the running of the vehicle, even though the time for activation of the catalyst is shortened.

To address the above issue, the present inventors considered covering the catalyst portion with a vehicle body cover provided in front of the catalyst portion, to reduce the volume of airflow applied to the catalyst portion provided in front of the engine main body. However, if the catalyst portion is covered with the vehicle body cover provided in front thereof, hot air is retained between the engine main body and the vehicle body cover when the vehicle stops after running. At this time, not only the catalyst portion but also the engine main body have a high temperature. Thus, it is considered that the temperature in the space between the engine main body and the vehicle body cover is even higher immediately after the vehicle has stopped running. Because of this, even though the deactivation of the catalyst during the running of the vehicle is prevented, a greater thermal effect is made, after the vehicle has stopped running, on the vehicle parts provided near the catalyst portion.

Thus, in the above arrangement in which the catalyst portion is provided in front of the engine main body, the following concerns are raised: the temperature drop of the catalyst portion during the running of the vehicle; and the thermal effect made, after the vehicle has stopped running, on the vehicle parts provided near the catalyst portion. Taking the above into consideration, the present inventors made a further study on the airflow in front of the engine main body. As a result of the study, the inventors came up with an idea of positioning the catalyst portion and the vehicle body cover, taking advantage of the airflow in front of the engine main body. The inventors found that the conceived idea makes it possible to minimize the thermal effect made, after the vehicle has stopped running, on the vehicle parts provided near the catalyst portion, while minimizing the temperature drop of the catalyst portion during the running of the vehicle.
(1) A straddled vehicle of the present teaching includes: a vehicle body frame; an engine unit supported by the vehicle body frame; a front wheel unit including at least one front wheel and provided in front of the engine unit in a vehicle front-rear direction when viewed in a vehicle left-right direction, a length in the left-right direction of the front wheel unit being shorter than a maximum length in the left-right direction of the engine unit; and a vehicle body cover covering at least a part of the vehicle body frame and supported by the vehicle body frame. The engine unit includes: an engine main body including at least one combustion chamber; and an exhaust device connected to a front portion of the engine main body, exhaust gas discharged from the at least one combustion chamber flowing through the exhaust device, the exhaust device including an atmosphere discharge port through which the exhaust gas is discharged to the atmosphere. The exhaust device includes: a catalyst portion including a main catalyst which is configured to purify the exhaust gas discharged from the at least one combustion chamber most in at least one exhaust path from the at least one combustion chamber to the atmosphere discharge port, the length of the catalyst portion in a flow direction of the exhaust gas being identical to the length of the main catalyst in the flow direction of the exhaust gas, the catalyst portion being provided below an upper end of the front wheel unit in a vehicle up-down direction, at least a part of the catalyst portion provided between the engine main body and the front wheel unit when viewed in the left-right direction; and an upstream exhaust passage member connecting the catalyst portion to the engine main body. The vehicle body cover includes: a left catalyst cover covering at least a part of the catalyst portion when viewed from left in the left-right direction, at least a part of a front end of the left catalyst cover provided between the catalyst portion and the front wheel unit when viewed from the left in the left-right direction; and a right catalyst cover covering at least a part of the catalyst portion when viewed from right in the left-right direction, at least a part of a front end of the right catalyst cover provided between the catalyst portion and the front wheel unit when viewed from the right in the left-right direction. The vehicle body cover is designed so that a maximum distance in the left-right direction between the front end of the left catalyst cover and the front end of the right catalyst cover is shorter than a maximum length in the left-right direction of the engine main body. The exhaust device and the vehicle body cover are designed so that when the vehicle body cover, the engine main body, and the exhaust device are viewed from the front in the front-rear direction, a half or more of the catalyst portion is exposed between the front end of the left catalyst cover and the front end of the right catalyst cover.
   In the above arrangement, the straddled vehicle includes the vehicle body frame, the engine unit, the front wheel unit, and the vehicle body cover. Hereinafter, a left-right direction, a front-rear direction, and an up-down direction are a vehicle left-right direction, a vehicle front-rear direction, and a vehicle up-down direction, respectively. The engine unit is supported by the vehicle body frame. The front wheel unit includes at least one front wheel. The front wheel unit is provided in front of the engine unit when viewed in the left-right direction. The vehicle body cover covers at least a part of the vehicle body frame. The vehicle body cover is supported by the vehicle body frame. The engine unit includes the engine main body and the exhaust device. The engine main body includes the at least one combustion chamber. The exhaust device is connected to the front portion of the engine main body. The exhaust gas discharged from the at least one combustion chamber flows through the exhaust device. The exhaust device has the atmosphere discharge port for discharging the exhaust gas to the atmosphere. The exhaust device includes the catalyst portion and the upstream exhaust passage member. The catalyst portion includes the main catalyst. The main catalyst purifies the exhaust gas discharged from the at least one combustion chamber the most in the at least one exhaust path from the at least one combustion chamber to the atmosphere discharge port. The length of the catalyst portion in the flow direction of the exhaust gas is identical to the length of the main catalyst in the flow direction of the exhaust gas. The upstream exhaust passage member connects the catalyst portion to the engine main body.
   In the straddled vehicle structured as above, at least a part of the catalyst portion is provided between the engine main body and the front wheel unit when viewed in the left-right direction. Due to this, the path length from the combustion chamber of the engine main body to the catalyst portion is short. For this reason, the exhaust gas at an even higher temperature flows into the catalyst portion. Accordingly, it is possible to shorten the time required to activate the deactivated main catalyst at the cold start of the engine unit. The cold start of the engine unit indicates that the engine unit is started in a state in which the temperature of the engine main body is equal to or lower than the outside temperature. The length in the left-right direction of the front wheel unit is shorter than the maximum length in the left-right direction of the engine unit. The front wheel unit is provided in front of the engine unit when viewed in the left-right direction. During the running of the vehicle, airflow to the vehicle is branched at a front end of the front wheel unit into left and right air streams, which flow rearward while spreading. The present inventors conceived an idea of utilizing the above airflow in order to minimize: the temperature drop of the catalyst portion during the running of the vehicle; and the thermal effect made, after the vehicle has stopped running, on the vehicle parts provided near the catalyst portion.
   The left catalyst cover of the vehicle body cover covers at least a part of the catalyst portion when viewed from the left. The right catalyst cover of the vehicle body cover covers at least a part of the catalyst portion when viewed from the right. The above arrangement makes it possible to reduce the direct subjection of the catalyst portion to airflow from the left and right, during the running of the vehicle. Moreover, at least a part of the front end of the left catalyst cover is provided between the catalyst portion and the front wheel unit when viewed from the left. Furthermore, at least a part of the front end of the right catalyst cover is provided between the catalyst portion and the front wheel unit when viewed from the right. Because of this, during the running of the vehicle, it is possible to reduce the direct subjection of the catalyst portion to airflow from the front, which has passed the left or right side of the front wheel unit and has been drawn to a space behind the front wheel unit. Accordingly, it is possible to reduce the direct subjection of the catalyst portion to airflow not only from the left and right but also from the front, during the running of the vehicle. Subsequently, the maximum distance in the left-right direction between the front end of the left catalyst cover and the front end of the right catalyst cover is termed a distance D. The vehicle body cover is designed so that the distance D is shorter than the maximum length in the left-right direction of the engine main body. That is, the distance in the left-right direction between the front end of the left catalyst cover and the front end of the right catalyst cover is relatively short. This makes it possible to reduce the entry of the airflow generated by the running of the vehicle into a gap between the front end of the left catalyst cover and the front end of the right catalyst cover. It is therefore possible to further reduce the direct subjection of the catalyst portion to airflow from the front.
   In addition to the above, at least a part of the catalyst portion is provided between the engine main body and the front wheel unit when viewed in the left-right direction. Furthermore, the catalyst portion is provided below the upper end of the front wheel unit. By means of the front wheel unit, it is possible to further reduce the direct subjection of the catalyst portion to airflow, during the running of the vehicle.
   Thus, the catalyst portion is prevented from being directly subjected to airflow during the running of the vehicle, and therefore it is possible to minimize the temperature drop of the catalyst portion during the running of the vehicle.
   Furthermore, when the vehicle body cover, the engine main body, and the exhaust device are viewed from the front, a half or more of the catalyst portion is exposed between the front end of the left catalyst cover and the front end of the right catalyst cover. Designing the exhaust device and the vehicle body cover as above enables the catalyst portion to be subjected to an appropriate volume of air during the running of the vehicle. Thus, during the running of the vehicle, it is possible to minimize the thermal effect made on the vehicle parts provided near the catalyst portion and the deterioration of the main catalyst, while minimizing the temperature drop of the catalyst portion. Designing the exhaust device and the vehicle body cover as above makes it more likely that the heat of the catalyst portion is radiated forward. For this reason, it is less likely that hot air is retained around the catalyst portion when the vehicle stops after running. This enables the minimization of the thermal effect on the vehicle parts provided near the catalyst portion after the vehicle has stopped running. Thus, even though the catalyst portion is provided in front of the engine main body, it is possible to minimize the thermal effect made, after the vehicle has stopped running, on the vehicle parts provided near the catalyst portion, while minimizing the temperature drop of the catalyst portion during the running of the vehicle.
   For the above-described reasons, the straddled vehicle of the present teaching makes it possible to shorten the period of time required to activate the deactivated catalyst in the catalyst portion, while minimizing: the thermal effect on the vehicle parts provided near the catalyst portion; and the deterioration of the main catalyst.
(2) The straddled vehicle of the present teaching preferably includes the following feature. The exhaust device and the vehicle body cover are configured so that when the vehicle body cover, the engine main body, the exhaust device, and the front wheel unit are viewed from the front in the front-rear direction, at least a part of the catalyst portion is exposed between the front end of the left catalyst cover and a left end of the front wheel unit, or between the front end of the right catalyst cover and a right end of the front wheel unit.
   In the above arrangement, when the vehicle body cover, the engine main body, the exhaust device, and the front wheel unit are viewed from the front, at least a part of the catalyst portion is exposed between the front end of the left catalyst cover and the left end of the front wheel unit. Alternatively, when the vehicle body cover, the engine main body, the exhaust device, and the front wheel unit are viewed from the front, at least a part of the catalyst portion is exposed between the front end of the right catalyst cover and the right end of the front wheel unit. Designing the exhaust device and the vehicle body cover as above makes it further more likely that the heat of the catalyst portion is radiated forward. For this reason, it is further less likely that hot air is retained around the catalyst portion when the vehicle stops after running. It is therefore possible to further minimize the thermal effect made on the vehicle parts provided near the catalyst portion and the deterioration of the main catalyst.
(3) The straddled vehicle of the present teaching preferably includes the following feature. The exhaust device is configured so that when viewed in the front-rear direction, a center of an upstream end of the catalyst portion and a center of a downstream end of the catalyst portion are both positioned to the left or right of a plane passing a center in the left-right direction of the front wheel unit.
   In the above arrangement, when viewed in the front-rear direction, both the center of the upstream end of the catalyst portion and the center of the downstream end of the catalyst portion are positioned to the left or right of a plane passing the center in the left-right direction of the front wheel unit. That is, when viewed in the front-rear direction, the catalyst portion is provided at a rightish or leftish position in the vehicle. Due to this, when the front wheel unit includes only a single front wheel, the central axis of the catalyst portion is not positioned straight behind the center in the left-right direction of the single front wheel. Suppose a case in which the central axis of the catalyst portion is positioned straight behind the center in the left-right direction of the front wheel. When compared with this case, the above-described arrangement of the present teaching makes it easier to implement the configuration in which a part of the catalyst portion is exposed between the left or right catalyst cover and the front wheel unit. Due to this, it is further more likely that the heat of the catalyst portion is radiated forward. As described above, a half or more of the catalyst portion is exposed between the front end of the left catalyst cover and the front end of the right catalyst cover when viewed from the front. For this reason, it is further less likely that hot air is retained around the catalyst portion when the vehicle stops after running. It is therefore possible to further minimize the thermal effect made on the vehicle parts provided near the catalyst portion and the deterioration of the main catalyst.
(4) The straddled vehicle of the present teaching preferably includes the following feature. The catalyst portion is disposed so that the flow direction of the exhaust gas flowing in the catalyst portion is along the up-down direction.
   In the above arrangement, the catalyst portion is disposed so that the flow direction of the exhaust gas flowing in the catalyst portion is along the up-down direction. The length in the up-down direction of the catalyst portion is longer than that in cases where the catalyst portion is disposed so that the flow direction of the exhaust gas flowing in the catalyst portion is along the front-rear direction. The catalyst portion disposed so as to have such a long length in the up-down direction has a large surface area when viewed from the front, i.e., in a front view. Due to this, it is further more likely that the heat of the catalyst portion is radiated forward. As described above, a half or more of the catalyst portion is exposed between the front end of the left catalyst cover and the front end of the right catalyst cover when viewed from the front. For this reason, it is further less likely that hot air is retained around the catalyst portion when the vehicle stops after running. It is therefore possible to further minimize the thermal effect made on the vehicle parts provided near the catalyst portion and the deterioration of the main catalyst. The direction along the up-down direction is not limited to the direction in parallel to the up-down direction. This direction includes a direction tilted by +45 to -45 degrees with respect to the up-down direction.
(5) The straddled vehicle of the present teaching preferably includes the following feature. The engine main body has at least one cylinder hole forming a part of the at least one combustion chamber, respectively. The engine main body is disposed so that the central axis of the at least one cylinder hole is along the up-down direction.
   In the above arrangement, the engine main body is disposed so that the central axis of the cylinder hole is along the up-down direction. In this connection, the definition that a central axis is along the up-down direction is not limited to cases where the central axis is in parallel to the up-down direction. The definition encompasses cases where the central axis is tilted by +45 to -45 degrees with respect to the up-down direction. The cylinder hole forms a part of the combustion chamber. In general, the engine main body is long in the direction of the central axis of the cylinder hole. Accordingly, in the above arrangement, the length in the up-down direction of the engine main body is long when compared with cases where the engine main body is disposed so that the central axis of the cylinder hole is along the front-rear direction. The engine main body disposed so as to have such a long length in the up-down direction has a large surface area when viewed from the front, i.e., in a front view. Due to this, it is further more likely that the heat of the combustion chamber is radiated forward from a front surface of the engine main body. As described above, a half or more of
(7) The straddled vehicle of the present teaching preferably includes the following features. The engine main body includes: a crankcase member which is provided at a lower part of the engine main body and includes the crankshaft; and a cylinder portion which is connected to an upper end portion of the crankcase member and includes the at least one combustion chamber. At least a part of the catalyst portion is provided in front of the crankcase member in the front-rear direction.
   In the above arrangement, the engine main body includes the crankcase member and the cylinder portion. The crankcase member is provided at a lower part of the engine main body. The crankcase member includes the crankshaft. The cylinder portion is connected to an upper end portion of the crankcase member. The cylinder portion includes the at least one combustion chamber. At least a part of the catalyst portion is provided in front of the crankcase member. It is assumed that the catalyst portion is provided in front of the cylinder portion and not provided in front of the crankcase member. In this case, the path length from the combustion chamber to the catalyst portion is too short. When the path length from the combustion chamber to the catalyst portion is too short, the temperature of the exhaust gas flowing into the main catalyst may be too high. As a result, the main catalyst may deteriorate. When at least a part of the catalyst portion is provided in front of the crankcase member, the deterioration of the main catalyst is prevented..
(8) The straddled vehicle of the present teaching preferably includes the following features. The engine main body has at least one cylinder hole forming a part of the at least one combustion chamber, respectively. When viewed in the left-right direction, at least a part of the catalyst portion is provided in front of a linear line in the front-rear direction, the linear line which is orthogonal to the central axis of the cylinder hole and passes the central axis of the crankshaft.
   It is assumed that a linear line which is orthogonal to the central axis of the cylinder hole and passes the central axis of the crankshaft when viewed in the left-right direction is a linear line L. When viewed in the left-right direction, at least a part of the catalyst portion is provided in front of the linear line L. Due to this, the path length from the combustion chamber to the catalyst portion is shortened when compared to cases where the entirety of the catalyst portion is provided behind the linear line L when viewed in the left-right direction. For this reason, the temperature of the exhaust gas flowing into the main catalyst is increased. As a result, at the cold start of the engine unit, the time required to activate the deactivated main catalyst is shortened.at the cold start of the engine unit.
   If the entirety of the catalyst portion is provided behind the linear line L when viewed in the
(7) The straddled vehicle of the present teaching preferably includes the following features. The engine main body includes: a crankcase member which is provided at a lower part of the engine main body and includes the crankshaft; and a cylinder portion which is connected to an upper end portion of the crankcase member and includes the at least one combustion chamber. At least a part of the catalyst portion is provided in front of the crankcase member in the front-rear direction.
   In the above arrangement, the engine main body includes the crankcase member and the cylinder portion. The crankcase member is provided at a lower part of the engine main body. The crankcase member includes the crankshaft. The cylinder portion is connected to an upper end portion of the crankcase member. The cylinder portion includes the at least one combustion chamber. At least a part of the catalyst portion is provided in front of the crankcase member. It is assumed that the catalyst portion is provided in front of the cylinder portion and not provided in front of the crankcase member. In this case, the path length from the combustion chamber to the catalyst portion is too short. When the path length from the combustion chamber to the catalyst portion is too short, the temperature of the exhaust gas flowing into the main catalyst may be too high. As a result, the main catalyst may deteriorate. When at least a part of the catalyst portion is provided in front of the crankcase member, the deterioration of the main catalyst is prevented..
(8) The straddled vehicle of the present teaching preferably includes the following feature. When viewed in the left-right direction, at least a part of the catalyst portion is provided in front of a linear line in the front-rear direction, the linear line which is orthogonal to the central axis of the cylinder hole and passes the central axis of the crankshaft.
   It is assumed that a linear line which is orthogonal to the central axis of the cylinder hole and passes the central axis of the crankshaft when viewed in the left-right direction is a linear line L. When viewed in the left-right direction, at least a part of the catalyst portion is provided in front of the linear line L. Due to this, the path length from the combustion chamber to the catalyst portion is shortened when compared to cases where the entirety of the catalyst portion is provided behind the linear line L when viewed in the left-right direction. For this reason, the temperature of the exhaust gas flowing into the main catalyst is increased. As a result, at the cold start of the engine unit, the time required to activate the deactivated main catalyst is shortened.at the cold start of the engine unit.
   If the entirety of the catalyst portion is provided behind the linear line L when viewed in the left-right direction, the lower end of the catalyst portion may be significantly lower than the lower end of the engine main body. In this case, it is necessary to increase the size of the vehicle in the up-down direction in order to provide for a sufficient distance between the catalyst portion and the ground. Because at least a part of the catalyst portion is provided in front of the linear line L when viewed in the left-right direction, the increase in size of the vehicle in the up-down direction is restrained.
(9) The straddled vehicle of the present teaching preferably includes the following feature. The vehicle body cover is designed so that, in a freely-selected horizontal plane passing the catalyst portion, a distance in the left-right direction between a rear end of the left catalyst cover and a rear end of the right catalyst cover is longer than a distance in the left-right direction between the front end of the left catalyst cover and the front end of the right catalyst cover.
   The distance in the left-right direction between the rear end of the left catalyst cover and the rear end of the right catalyst cover in a freely-selected horizontal plane passing the catalyst portion is termed a distance Db. Meanwhile, the distance in the left-right direction between the front end of the left catalyst cover and the front end of the right catalyst cover in the above-described horizontal plane is termed a distance Df. The distance Db is longer than the distance Df. Because the distance Db is longer, it is easier to ensure a gap between a member covered with a rear portion of the left catalyst cover and the rear end of the left catalyst cover. This makes it easier to discharge the hot air, which is between the left catalyst cover and the catalyst portion, rearward through the rear end of the left catalyst cover. Because the distance Db is longer, it is easier to ensure a gap between a member covered with a rear portion of the right catalyst cover and the rear end of the right catalyst cover. This makes it easier to discharge the hot air, which is between the right catalyst cover and the catalyst portion, rearward through the rear end of the right catalyst cover. For the above reasons, it is less likely that hot air is retained around the catalyst portion when the vehicle stops after running. It is therefore possible to further minimize the thermal effect made on the vehicle parts provided near the catalyst portion and the deterioration of the main catalyst. It is important to note that the member covered with the rear portion of the left catalyst cover described above may be the catalyst portion or may be a member other than the catalyst portion. The same applies to the member covered with the rear portion of the right catalyst cover.
(10) The straddled vehicle of the present teaching preferably includes the following feature. The catalyst portion includes: a cylindrical part which houses the main catalyst and is connected to the downstream end of the upstream exhaust passage member; and a catalyst protector portion arranged to cover at least a part of an outer surface of the cylindrical part.
   According to this arrangement, the catalyst portion includes the main catalyst, the cylindrical part, and the catalyst protector portion. The cylindrical part houses the main catalyst. The cylindrical part is connected to the downstream end of the upstream exhaust passage member. The catalyst protector portion covers at least a part of the outer surface of the cylindrical part. When the catalyst protector portion is provided, the heat keeping effect of the main catalyst is improved. As a result, at the cold start of the engine unit, the time required to activate the deactivated main catalyst is further shortened.
(11) The straddled vehicle of the present teaching preferably includes the following feature. The exhaust device includes: a downstream exhaust passage member connected to a downstream end of the catalyst portion and having the atmosphere discharge port; and at least one downstream sub-catalyst provided in the downstream exhaust passage member and configured to purify the exhaust gas.
   In the above arrangement, the exhaust device includes the downstream exhaust passage member. The downstream exhaust passage member is connected to the downstream end of the catalyst portion. The downstream exhaust passage member has the atmosphere discharge port. The exhaust device includes at least one downstream sub-catalyst configured to purify the exhaust gas. The at least one downstream sub-catalyst is provided in the downstream exhaust passage member. Because the downstream sub-catalyst is provided, it is possible to downsize the main catalyst while maintaining the exhaust gas purification performance, when compared with cases where the downstream sub-catalyst is not provided. This increases the degree of freedom in the position of the catalyst portion. Therefore, it is possible to position the catalyst portion so that the path length from the combustion chamber to the catalyst portion is even shorter. Accordingly, it is possible to further shorten the time required to activate the deactivated main catalyst at the cold start of the engine unit.
(12) The straddled vehicle of the present teaching preferably includes the following feature. The engine main body includes at least one internal exhaust passage member connecting the at least one combustion chamber to the upstream exhaust passage member. The exhaust device includes at least one upstream sub-catalyst configured to purify the exhaust gas, the upstream sub-catalyst being provided in either one or both of the at least one internal exhaust passage member and the upstream exhaust passage member.
   In the above arrangement, the engine main body includes at least one internal exhaust passage member. The internal exhaust passage member connects the combustion chamber to the upstream exhaust passage member. The exhaust device includes at least one upstream sub-catalyst configured to purify the exhaust gas. The at least one upstream sub-catalyst is provided in either one or both of the at least one internal exhaust passage member and the upstream exhaust passage member. Because the upstream sub-catalyst is provided, it is possible to downsize the main catalyst while maintaining the exhaust gas purification performance, when compared with cases where the upstream sub-catalyst is not provided. This increases the degree of freedom in the position of the catalyst portion. Therefore, it is possible to position the catalyst portion so that the path length from the combustion chamber to the catalyst portion is even shorter. Accordingly, it is possible to further shorten the time required to activate the deactivated main catalyst at the cold start of the engine unit.
(13) The straddled vehicle of the present teaching preferably includes the following feature. At least a part of the upstream exhaust passage member is formed of a multi-walled pipe which includes an inner pipe and at least one outer pipe covering the inner pipe.
   According to this arrangement, at least a part of the upstream exhaust passage member is formed of a multi-walled pipe. The multi-walled pipe includes an inner pipe and at least one outer pipe which covers the inner pipe. Because at least a part of the upstream exhaust passage member is formed of the multi-walled pipe, it is possible to restrain the decrease in temperature of the exhaust gas in the upstream exhaust passage member. As a result, at the cold start of the engine unit, the time required to activate the deactivated main catalyst is shortened.
(14) The straddled vehicle of the present teaching preferably includes the following feature. The engine main body includes an oil filter at a front portion.
   The exhaust device and the oil filter are arranged to expose at least a part of the oil filter when the engine unit and the oil filter are viewed from a front side in the front-rear direction.
   According to this arrangement, the oil filter is provided at the front portion of the engine main body. When the exhaust device and the oil filter are viewed from the front side, at least a part of the oil filter is exposed. That is, when the exhaust device and the oil filter are viewed from the front, the oil filter is not completely covered with the catalyst portion provided in front thereof. This makes it less likely that the oil filter is affected by the heat of the catalyst portion even when the oil filter is provided near the catalyst portion.
(15) The straddled vehicle of the present teaching preferably includes the following feature. The number of catalyst portions is one.
(16) The straddled vehicle of the present teaching preferably includes the following features. The number of the at least one combustion chamber is four or more. The straddled vehicle includes a plurality of the catalyst portions. The exhaust device is configured so that only the exhaust gas discharged from one or some of the combustion chambers passes corresponding one of the catalyst portions.

### [Brief Description of Drawings]

FIG. 1 is a right side view of a motorcycle of an embodiment.
FIG. 2 is a cross-section taken along a line II-II in FIG.1.
FIG. 3 is a right side view of an engine unit.
FIG. 4 is a front view of the engine unit.
FIG. 5 is a right side view of a part of the engine unit.
FIG. 6 is a front view of a part of the engine unit.
FIG. 7 is a schematic diagram of a part of the engine unit.
FIG. 8 is a schematic diagram of a part of the engine unit.
FIG. 9 is a cross-section of a muffler member.
FIG. 10 is a plan view of an exhaust device.
FIG. 11 is a right side view of an engine unit of a modification.
FIG. 12 is a right side view of a part of an engine unit of Modification 1.
FIG. 13 is a right side view of a part of an engine unit of Modification 2.
FIG. 14 is a cross-section of a turbocharger of Modification 2.
FIG. 15 is a side view of the turbocharger of Modification 2.
FIG. 16 is a right side view of a part of an engine unit of a modification.
FIG. 17 is a cross-section of an upstream exhaust passage member of another modification.
FIG. 18 is a plan view of a part of the engine unit of another modification.
FIG. 19 is a front view of a part of the engine unit of another modification.

### Description of Embodiments

The following will describe an embodiment of the present invention. The present embodiment is an example in which a straddled vehicle of the present teaching is embodied as a sports-type motorcycle. Hereinafter, a front-rear direction is a vehicle front-rear direction for a rider seated on a below-described seat 9 of a motorcycle 1. A left-right direction is a vehicle left-right direction for the rider seated on the seat 9. The vehicle left-right direction is identical to a vehicle width direction. In each figure, arrows F and B indicate forward and backward, respectively, arrows L and R indicate leftward and rightward, respectively, and arrows U and D indicate upward and downward, respectively. The present embodiment is described based on the definition of terms described at the end of this specification. The same applies to later-described modifications.

### [Overall Structure of Motorcycle]

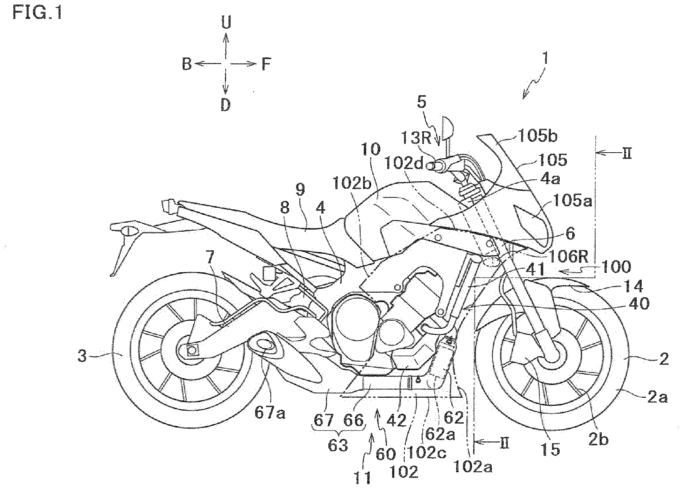

As shown in FIG. 1, the motorcycle 1 is provided with a front wheel unit 2, a rear wheel unit 3, and a vehicle body frame 4. The vehicle body frame 4 includes a head pipe 4a at a front portion. A steering shaft (not illustrated) is rotatably inserted into the head pipe 4a. An upper end portion of the steering shaft is connected to a handle unit 5. An upper end portion of a pair of front forks 6 is fixed to the handle unit 5. The lower end portions of the front forks 6 support the front wheel unit 2. The front forks 6 are configured to absorb shocks in the up-down direction. The front wheel unit 2 includes a single front wheel. The front wheel has a tire 2a and a wheel 2b. An upper part of the front wheel unit 2 is covered with a fender. 14. A disc brake 15 is attached to the front wheel unit 2.

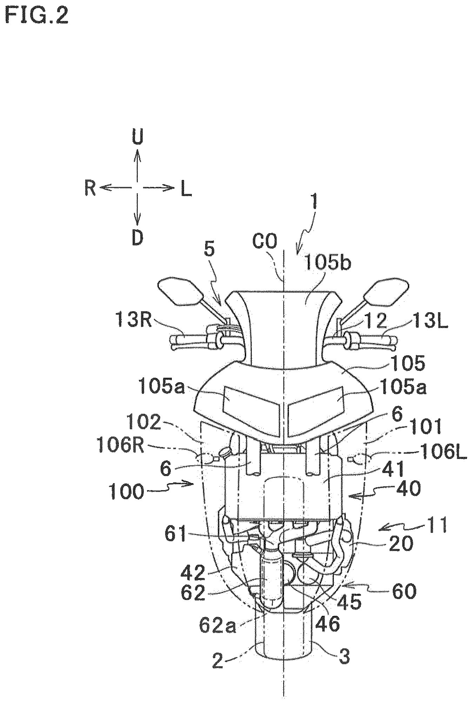

As shown in FIG. 2, the handle unit 5 includes a single handlebar 12 which extends in the left-right direction. Grips 13L and 13R are provided at left and right ends of the handlebar 12, respectively. The left grip 13R is a throttle grip for adjusting the output of the engine.

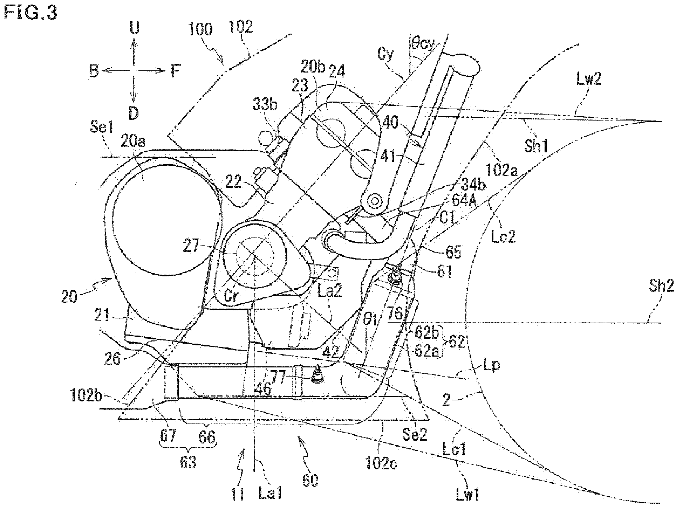

As shown in FIG. 1, a pair of swingarms 7 is swingably supported by the vehicle body frame 4. The rear end portions of the swingarms 7 support the rear wheel unit 3. The rear wheel unit 3 includes a single rear wheel. One end portion of a rear suspension 8 is attached to a part of each swingarm 7, which is rearward of the swing center. The other end portion of the rear suspension 8 is attached to the vehicle body frame 4. The rear suspension 8 is configured to absorb shocks in the up-down direction. FIG. 1 and later-described FIG. 2 show a state in which the front forks 6 and the rear suspension 8 are maximally elongated in the up-down direction. In other words, the vehicle body frame 4 is at the highest relative to the front wheel unit 2 and the rear wheel unit 3. The same applies to FIG. 3, FIG. 4, and FIG. 5, which will be described later.

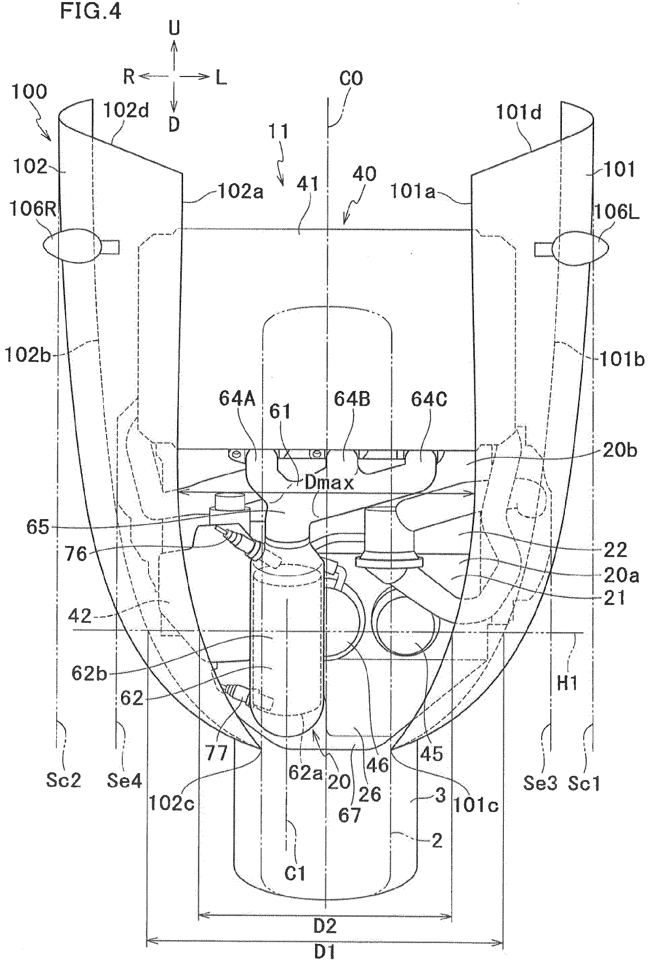

The vehicle body frame 4 supports the seat 9 and the fuel tank 10. The fuel tank 10 is provided in front of the seat 9. The vehicle body frame 4 supports the engine unit 11. The engine unit 11 may be directly or indirectly connected to the vehicle body frame 4. The engine unit 11 is provided straight below the fuel tank 10. The engine unit 11 is provided below the upper end of the seat 9. The front wheel unit 2 is provided in front of the engine unit 11 when viewed in the left-right direction. The rear wheel unit 3 is provided behind the engine unit 11 when viewed in the left-right direction. As shown in FIG. 2 and FIG. 4, the width in the left-right direction of the engine unit 11 is longer than the width in the left-right direction of the front wheel unit 2. The width in the left-right direction of the engine unit 11 is longer than the width in the left-right direction of the rear wheel unit 3. In this specification, the width in the left-right direction indicates the maximum length in the left-right direction. The vehicle body frame 4 supports a battery (not illustrated). The battery supplies electric power to electronic devices such as a controller (not illustrated) for controlling the engine unit 11 and sensors.

As shown in FIG. 1, the vehicle body frame 4 supports a vehicle body cover 100 and a front cowling 105. In FIG. 1, FIG. 2, and FIG. 3, the outline of the vehicle body cover 100 is illustrated by two-dot chain lines, and a portion usually covered with the vehicle body cover 100 is illustrated by solid lines. The front cowling 105 is provided with a headlight 105a and a windshield 105b. The vehicle body cover 100 includes a left catalyst cover 101 and a right catalyst cover 102. As shown in FIG. 2, the left catalyst cover 101 is provided at a left part of the motorcycle 1. The right catalyst cover 102 is provided at a right part of the motorcycle 1. As shown in FIG. 1, the right catalyst cover 102 covers a part of the vehicle body frame 4, a part of the engine unit 11, and a part of an exhaust device 60, when viewed from the right. Although not shown in the figures, the left catalyst cover 101 covers a part of the vehicle body frame 4, a part of the engine unit 11, and a part of the exhaust device 60, when viewed from the left. Turn indicators 106L and 106R are provided on surfaces of the left catalyst cover 101 and the right catalyst cover 102, respectively. The turn indicators 106L and 106R pass though the respective covers 101 and 102, and are supported by the vehicle body frame 4.

### [Structure of Engine Unit]

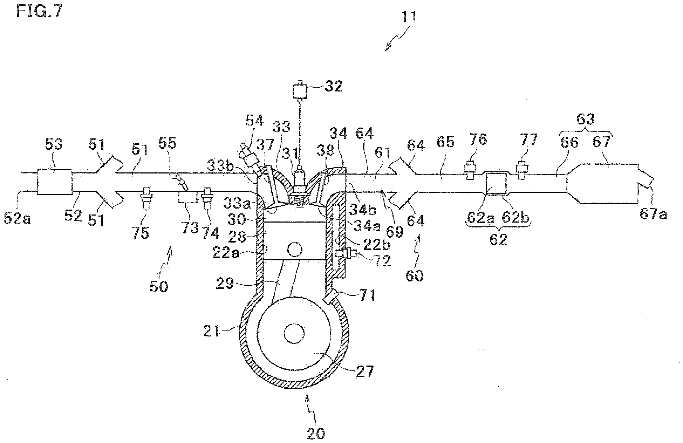

As shown in FIG. 1, the engine unit 11 includes an engine main body 20, a water cooling device 40, and an exhaust device 60. As shown in FIG. 7, the engine unit 11 further includes an intake device 50. The engine main body 20 is connected to the water cooling device 40, the intake device 50, and the exhaust device 60. The engine unit 11 is a 3-cylinder engine including 3 cylinders. The engine unit 11 is a 4-stroke engine. The 4-stroke engine repeats an intake process, a compression process, a combustion process (expansion process), and an exhaust process. The combustion process in the 3-cylinder engine is performed at different timings in the respective 3 cylinders. FIG. 7 shows only one of the 3 cylinders of the engine main body 20 and does not show the remaining 2 cylinders.

The engine unit 11 is a water-cooled engine. The engine main body 20 is cooled by coolant water. To the water cooling device 40, hot coolant water having absorbed heat from the engine main body 20 is supplied from the engine main body 20. The water cooling device 40 decreases the temperature of the coolant water supplied from the engine main body 20 and returns the coolant water to the engine main body 20. The water cooling device 40 includes a radiator 41, a radiator fan (not illustrated), and a reserve tank 42. The radiator 41 is provided in front of an upper part of the engine main body 20. The radiator fan is provided between the engine main body 20 and the radiator 41. The reserve tank 42 is provided in front of a lower part of the engine main body 20. The reserve tank 42 is provided in front of a right part of the engine main body 20. The reserve tank 42 may not be provided in front of a right part of the engine main body 20. The engine unit 11 includes a water pump (not illustrated) for circulating the coolant water. This water pump is provided in the engine main body 20.

### [Structure of Engine Main Body]

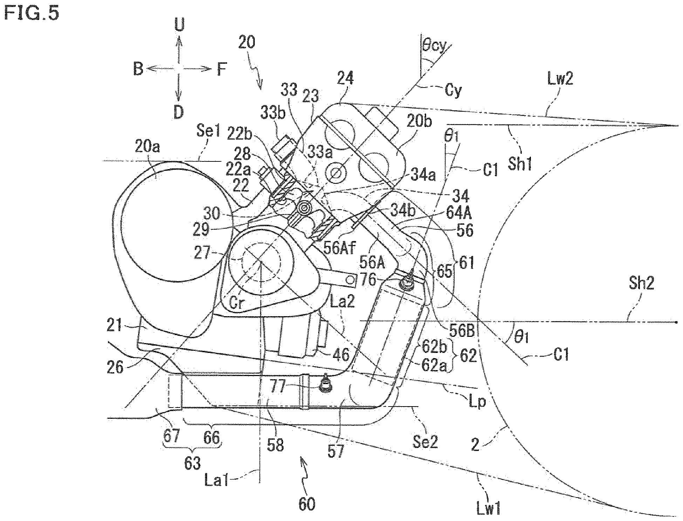

As shown in FIG. 3 and FIG. 5, the engine main body 20 includes a crankcase member 20a and a cylinder portion 20b. The crankcase member 20a is provided at a lower part of the engine main body 20. The cylinder portion 20b is provided at an upper part of the engine main body 20. The cylinder portion 20b is connected to an upper end portion of the crankcase member 20a.

The crankcase member 20a includes a crankcase 21 and an oil pan 26. The crankcase member 20a is further provided with a crankshaft 27 housed in the crankcase 21. Although not illustrated, the crankcase member 20a includes a transmission, a clutch, a starter motor, and a power generator. These members are also housed in the crankcase 21. Hereinafter, the central axis Cr of the crankshaft 27 is referred to as a crankshaft axis Cr. The crankshaft axis Cr is along the left-right direction. To be more specific, the crankshaft axis Cr is in parallel to the left-right direction.

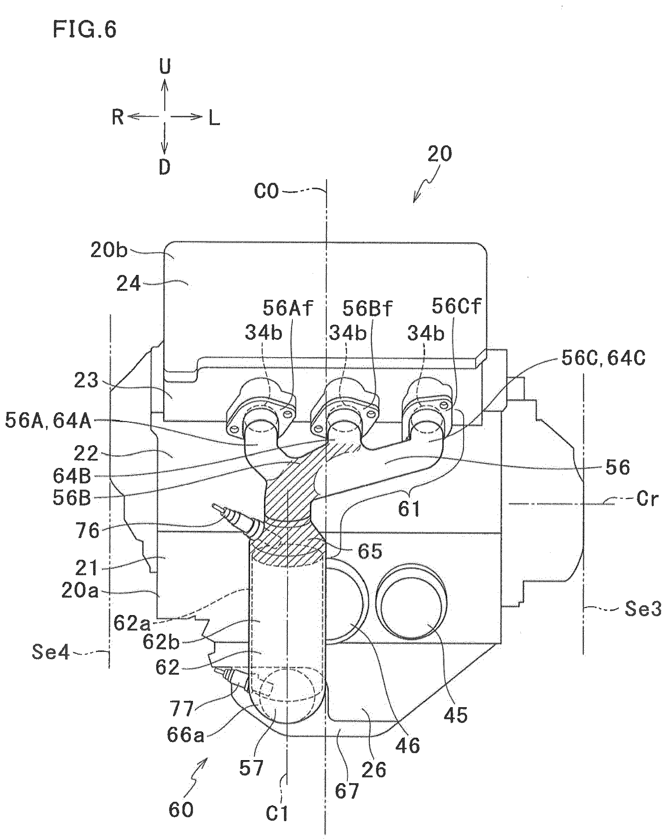

The oil pan 26 is provided at a lower part of the crankcase member 20a. The oil pan 26 is connected to a lower end of the crankcase 21. When viewed in the left-right direction, the border between the oil pan 26 and the crankcase 21 is substantially a linear line. When viewed in the left-right direction, an extension of the border between the oil pan 26 and the crankcase 21 is referred to as a linear line Lp. The linear line Lp is along the front-rear direction. The linear line Lp is inclined with a negative slope in the forward direction. The linear line Lp may orthogonally intersect with a later-described cylinder axial line Cy. As shown in FIG. 6, a right part of the oil pan 26 is dented. In other words, the right part of the oil pan 26 is above the left part of the oil pan 26. A part of the exhaust device 60 is provided in the dent of the oil pan 26. The oil pan 26 stores lubrication oil. The crankcase member 20a includes an oil pump (not illustrated) which is configured to suck the lubrication oil stored in the oil pan 26.

As shown in FIG. 4 and FIG. 6, an oil filter 45 and an oil cooler 46 are provided at a front portion of the crankcase member 20a. The oil cooler 46 is provided substantially at the center in the left-right direction of the crankcase member 20a. The oil filter 45 is provided to the left of the oil cooler 46. It is assumed that a plane which passes the center in the left-right direction of the front wheel unit 2 and the rear wheel unit 3 is C0. The center in the left-right direction of the front wheel unit 2 and the rear wheel unit 3 is the center in the left-right direction of the motorcycle 1. Hereinafter, the center in the left-right direction of the motorcycle 1 will be referred to as the center C0 in the left-right direction of the motorcycle 1. Hereinafter, the center in the left-right direction of the front wheel unit 2 will be referred to as the center C0 in the left-right direction of the front wheel unit 2. The oil cooler 46 is provided to overlap the center C0 in the left-right direction of the motorcycle 1. The oil filter 45 is provided to the left of the center C0 in the left-right direction of the motorcycle 1. As shown in FIG. 5, the oil cooler 46 protrudes forward from the front surface of the crankcase 21. Being similar to the oil cooler 46, the oil filter 45 also protrudes from the front surface of the crankcase 21. A filter main body (not illustrated) is provided inside the oil filter 45. The filter main body is configured to remove foreign matter in the lubrication oil. In consideration of the replacement of the filter main body, the oil filter 45 is arranged to be detachable from the crankcase 21.

As shown in FIG. 5, the cylinder portion 20b includes a cylinder body 22, a cylinder head 23, and a head cover 24. The cylinder body 22 is connected to an upper end portion of the crankcase 21. The cylinder head 23 is connected to an upper end portion of the cylinder body 22. The head cover 24 is connected to an upper end portion of the cylinder head 23.

As shown in FIG. 5 and FIG. 7, cylinder holes 22a are formed in the cylinder body 22. Three cylinder holes 22a are formed in the cylinder body 22. The three cylinder holes 22a are side by side in the left-right direction. A piston 28 is slidably housed in each cylinder hole 22a. The three pistons 28 are connected to a single crankshaft 27 via three connecting rods 29. Around the three cylinder holes 22a, a cooling passage 22b is formed to allow the coolant water to flow therein.

Hereinafter, the central axis Cy of the cylinder hole 22a is referred to as a cylinder axial line Cy. The three cylinder axial lines Cy are in parallel to one another. When viewed in the left-right direction, the three cylinder axial lines Cy overlap. As shown in FIG. 3 and FIG. 5, the cylinder axial lines Cy do not intersect with the crankshaft axis Cr. The cylinder axial lines Cy may intersect with the crankshaft axis Cr. The cylinder axial lines Cy are along the up-down direction. When viewed in the left-right direction, each cylinder axial line Cy is inclined in the front-rear direction with respect to the up-down direction. The cylinder axial line Cy is inclined so that the cylinder portion 20b is inclined forward. In other words, the cylinder axial line Cy is inclined with a positive slope in the forward direction. When viewed in the left-right direction, an inclination angle of the cylinder axial line Cy with respect to the up-down direction is termed an inclination angle θcy. The inclination angle θcy is not limited to the angle shown in FIG. 3 and FIG. 5. The inclination angle θcy is 0 degrees or greater than 0 degrees and 45 degrees or less than 45 degrees.

As shown in FIG. 5 and FIG. 7, combustion chambers 30 are formed in the cylinder portion 20b. Three combustion chambers 30 are formed in the cylinder portion 20b. The three combustion chambers 30 are side by side in the left-right direction. Each combustion chamber 30 is formed of the lower surface of the cylinder head 23, the cylinder hole 22a, and the upper surface of the piston 28. In other words, a part of the combustion chamber 30 is formed by the inner surface of the cylinder hole 22a. As shown in FIG. 3 and FIG. 5, it is assumed that a linear line which passes the crankshaft axis Cr and is in parallel to the up-down direction when viewed in the left-right direction is a linear line La1. When viewed in the left-right direction, the three combustion chambers 30 are provided in front of the linear line La1. In other words, when viewed in the left-right direction, the three combustion chambers 30 are provided forward of the crankshaft axis Cr.

A leading end portion of an ignition plug 31 is provided in the combustion chamber 30, as shown in FIG. 7. Spark discharge occurs at the leading end portion of the ignition plug 31. With this spark discharge, air-fuel mixture in the combustion chamber 30 is ignited. In this specification, the air-fuel mixture indicates a mixture of air and fuel. The ignition plug 31 is connected to an ignition coil 32. The ignition coil 32 stores electric power to cause spark discharge of the ignition plug 31. The ignition plug 31 and the ignition coil 32 constitute an ignition device.

Internal intake passage members 33 and internal exhaust passage members 34 are formed in the cylinder head 23. In this specification, a passage member is a structure forming a path. A path is a space through which gas or the like passes. The internal intake passage member 33 is connected to the combustion chamber 30. The internal intake passage member 33 is provided for each combustion chamber 30. The internal exhaust passage member 34 is connected to the combustion chamber 30. The internal exhaust passage member 34 is provided for each combustion chamber 30. The internal intake passage member 33 is provided to introduce air into the combustion chamber 30. The internal exhaust passage member 34 is provided to discharge the exhaust gas generated in the combustion chamber 30 from the combustion chamber 30.

A combustion chamber intake port 33a and a combustion chamber exhaust port 34a are formed in surfaces of the cylinder head 23 which form the combustion chamber 30. The combustion chamber intake port 33a is at the downstream end of the internal intake passage member 33. The combustion chamber exhaust port 34a is at the upstream end of the internal exhaust passage member 34. Intake ports 33b and exhaust ports 34b are formed in an outer surface of the cylinder head 23. The intake port 33b is at the upstream end of the internal intake passage member 33. The exhaust port 34b is at the downstream end of the internal exhaust passage member 34. The number of combustion chamber intake ports 33a provided for one combustion chamber 30 may be one, two, or more than two. The number of intake ports 33b is only one for one combustion chamber 30. For example, when two combustion chamber intake ports 33a are provided for one combustion chamber 30, the internal intake passage member 33 is formed to be branched into two. The number of combustion chamber exhaust ports 34a provided for one combustion chamber 30 may be one, two, or more than two. The number of exhaust ports 34b is only one for one combustion chamber 30. As shown in FIG. 5, the intake ports 33b are formed in the front surface of the cylinder head 23. The exhaust ports 34b are formed in the front surface of the cylinder head 23. As shown in FIG. 6, the three exhaust ports 34b are arranged to be side by side along the left-right direction.

As shown in FIG. 7, in the internal intake passage member 33, an intake valve 37 is provided to open and close the combustion chamber intake port 33a. The intake valve 37 is provided for each combustion chamber intake port 33a. In the internal exhaust passage member 34, an exhaust valve 38 is provided to open and close the combustion chamber exhaust port 34a. The exhaust valve 38 is provided for each combustion chamber exhaust port 34a. The intake valve 37 and the exhaust valve 38 are driven by a valve driving device (not illustrated) housed in the cylinder head 23. The valve driving device operates in sync with the crankshaft 27. The valve driving device may include a variable valve timing device. A known device is used as the variable valve timing device. The variable valve timing device is configured to change the timings to open and close the intake valve and/or the exhaust valve.

The engine main body 20 includes injectors 54. Each injector 54 is a fuel supplier configured to supply fuel to the combustion chamber 30. The injector 54 is provided for each combustion chamber 30. The injector 54 is positioned to inject fuel in the internal intake passage member 33. The injector 54 is connected to the fuel tank 10. A fuel pump (not illustrated) is provided inside the fuel tank 10. The fuel pump supplies fuel in the fuel tank 10 to the injector 54 with a pressure. The injector 54 may be positioned to inject fuel in the combustion chamber 30. Alternatively, the injector 54 may be positioned to inject fuel in a later-described branched intake passage member 51 of the intake device 50. The engine main body 20 may include a carburetor as a fuel supplier instead of the injector 54. The carburetor is configured to supply fuel into the combustion chamber 30 by utilizing a negative pressure in the combustion chamber 30.

The engine main body 20 includes an engine rotation speed sensor 71 and an engine temperature sensor 72. The engine rotation speed sensor 71 detects the rotation speed of the crankshaft 27, i.e., the engine rotation speed. The engine temperature sensor 72 detects the temperature of the engine main body 20. In the present embodiment, the engine temperature sensor 72 indirectly detects the temperature of the cylinder body 22 by detecting the temperature of the coolant water in the cooling passage 22b. The engine temperature sensor 72 may directly detect the temperature of the cylinder body 22.

### [Structure of Intake Device]

The intake device 50 includes one intake passage member 52 and three branched intake passage members 51. The intake passage member 52 is provided with an atmosphere suction port 52a which is exposed to the atmosphere. The atmosphere suction port 52a is at the upstream end of the intake passage member 52. The intake passage member 52 is provided with an air cleaner 53 configured to purify air. The downstream end of the intake passage member 52 is connected to the upstream ends of the three branched intake passage members 51. The downstream ends of the three branched intake passage members 51 are connected to the three intake ports 33b formed in the rear surface of the cylinder head 23, respectively. The atmosphere suction port 52a sucks air from the atmosphere. The air flowing into the intake passage member 52 through the atmosphere suction port 52a is supplied to the engine main body 20 via the three branched intake passage members 51.

A throttle valve 55 is provided in the branched intake passage member 51. One throttle valve 55 is provided for each combustion chamber 30. The opening degree of the throttle valve 55 is changed as the rider rotationally operates the throttle grip 13R.

A throttle position sensor 73, an intake pressure sensor 74, and an intake temperature sensor 75 are provided in each branched intake passage member 51. The throttle position sensor 73 detects the position of the throttle valve 55 and outputs a signal indicating a throttle opening degree. The throttle opening degree indicates the opening degree of the throttle valve 55. The intake pressure sensor 74 detects an internal pressure of the branched intake passage member 51. The intake temperature sensor 75 detects the temperature of air in the branched intake passage member 51.

### [Structure of Exhaust Device]

As shown in FIG. 7, the exhaust device 60 includes an upstream exhaust passage member 61, a catalyst portion (catalytic converter) 62, and a downstream exhaust passage member 63. Hereinafter, the upstream and downstream in the flow direction of exhaust gas of the exhaust device 60 and the internal exhaust passage member 34 will be simply referred to as upstream and downstream. The upstream exhaust passage member 61 includes three independent exhaust passage members 64 and an upstream collective exhaust passage member 65. One independent exhaust passage member 64 is provided for each combustion chamber 30. The downstream exhaust passage member 63 includes a downstream collective exhaust passage member 66 and a muffler member 67. The upstream ends of the three independent exhaust passage members 64 are connected to the three exhaust ports 34b formed in the front surface of the cylinder head 23, respectively. The downstream ends of the three independent exhaust passage members 64 are connected to the upstream end of the upstream collective exhaust passage member 65. The upstream collective exhaust passage member 65 gathers (merges) flows of the exhaust gas discharged from the three independent exhaust passage members 64. The downstream end of the upstream collective exhaust passage member 65 is connected to the upstream end of the catalyst portion 62. The catalyst portion 62 includes a main catalyst 62a which is configured to purify exhaust gas. The downstream end of the catalyst portion 62 is connected to the upstream end of the downstream collective exhaust passage member 66. The downstream end of the downstream collective exhaust passage member 66 is connected to the upstream end of the muffler member 67. The muffler member 67 has an atmosphere discharge port 67a exposed to the atmosphere. The exhaust gas discharged from the three exhaust ports 34b of the engine main body 20 passes the upstream exhaust passage member 61 and flows into the catalyst portion 62. After the exhaust gas is purified while passing through the main catalyst 62a, the exhaust gas passes the downstream exhaust passage member 63 and is discharged from the atmosphere discharge port 67a.

A passage from combustion chamber 30 to the atmosphere discharge port 67a will be referred to as an exhaust path 69. The engine unit 11 is provided with three exhaust paths 69. The exhaust path 69 is a space in which the exhaust gas discharged from one combustion chamber 30 passes. The exhaust path 69 is formed of the internal exhaust passage member 34, the upstream exhaust passage member 61, the catalyst portion 62, and the downstream exhaust passage member 63.

The following will describe the exhaust device 60 in a further detailed manner. As shown in FIG. 5, FIG. 6, and FIG. 10, the exhaust device 60 includes an exhaust pipe unit 56, a first collective exhaust pipe 57, a second collective exhaust pipe 58, and a muffler member 67. The exhaust pipe unit 56 includes a first exhaust passage member 56A, a second exhaust passage member 56B, and a third exhaust passage member 56C. The first to third exhaust passage members 56A, 56B, and 56C are provided in this order from right to left. The upstream ends of the first to third exhaust passage members 56A, 56B, and 56C are connected to the three exhaust ports 34b of the engine main body 20, respectively.

A passage which is substantially circular in cross-section is formed inside each of the first to third exhaust passage members 56A, 56B, and 56C. Mounting flange portions 56Af, 56Bf, and 56Cf are provided around the upstream ends of the first to third exhaust passage members 56A, 56B, and 56C. Each of the mounting flange portions 56Af, 56Bf, and 56Cf is plate-shaped. Each of the mounting flange portions 56Af, 56Bf, and 56Cf has a bolt hole to which a bolt is inserted. A part of the first exhaust passage member 56A, which is upstream of the mounting flange portion 56Af, is inserted into the internal exhaust passage member 34. The same applies to the second exhaust passage member 56B and the third exhaust passage member 56C. Each of the mounting flange portions 56Af, 56Bf, and 56Cf is in contact with the outer surface of the engine main body 20. Each of the mounting flange portions 56Af, 56Bf, and 56Cf is fixed to the outer surface of the engine main body 20 by a bolt. The total of the areas of the mounting flange portions 56Af, 56Bf, and 56Cf indicate the area of a part where the outer surface of the engine main body 20 is connected to the exhaust pipe unit 56.

The downstream ends of the first exhaust passage member 56A and the third exhaust passage member 56C are connected to an intermediate part of the second exhaust passage member 56B. The downstream end of the second exhaust passage member 56B is connected to the upstream end of the first collective exhaust pipe 57. The first exhaust passage member 56A forms an independent exhaust passage member 64A. The independent exhaust passage member 64A, however, does not include a part of the first exhaust passage member 56A, which is upstream of the mounting flange portion 56Af. In the second exhaust passage member 56B, a part upstream of the positions, where the first exhaust passage member 56A and the third exhaust passage member 56C are respectively connected, forms an independent exhaust passage member 64B. The independent exhaust passage member 64B, however, does not include a part of the second exhaust passage member 56B, which is upstream of the mounting flange portion 56Bf. The third exhaust passage member 56C forms an independent exhaust passage member 64C. The independent exhaust passage member 64C, however, does not include a part of the third exhaust passage member 56C, which is upstream of the mounting flange portion 56Cf. The independent exhaust passage members 64 collectively indicate the independent exhaust passage members 64A, 64B, and 64C.

A main catalyst 62a is provided in the first collective exhaust pipe 57. A part of the first collective exhaust pipe 57, where the main catalyst 62a is provided, is referred to as a cylindrical part 62b. The catalyst portion 62 consists of the cylindrical part 62b and the main catalyst 62a. The upstream collective exhaust passage member 65 is constituted of a part of the second exhaust passage member 56B, which is downstream of the independent exhaust passage member 64B, and a part of the first collective exhaust pipe 57, which is upstream of the main catalyst 62a. In FIG. 6, the upstream collective exhaust passage member 65 is hatched.

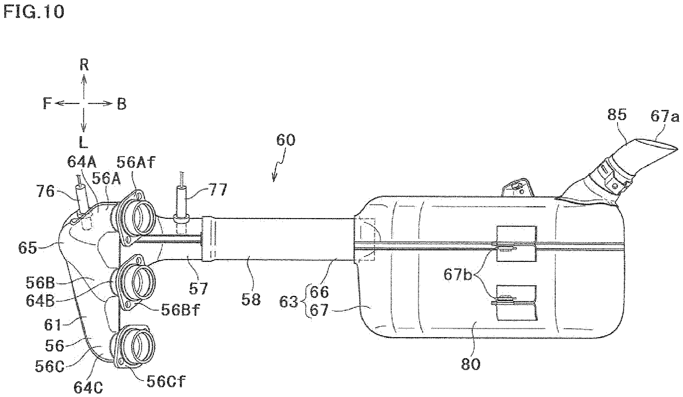

The downstream end of the first collective exhaust pipe 57 is connected to the upstream end of the second collective exhaust pipe 58. The first collective exhaust pipe 57 is a pipe which is substantially circular in cross-section. The second collective exhaust pipe 58 is a pipe which is substantially circular in cross-section. As shown in FIG. 10, the first collective exhaust pipe 57 is formed by welding left and right components. The downstream end of the second collective exhaust pipe 58 is connected to the muffler member 67. To be more specific, the downstream end of the second collective exhaust pipe 58 is provided in the muffler member 67. The downstream collective exhaust passage member 66 is constituted of a part of the first collective exhaust pipe 57, which is downstream of the main catalyst 62a, and the second collective exhaust pipe 58. The downstream collective exhaust passage member 66, however, does not include a part of the second collective exhaust pipe 58, which is provided in the muffler member 67.

As shown in FIG. 3 and FIG. 5, the three independent exhaust passage members 64 have a linear shape when viewed in the left-right direction. When viewed in the left-right direction, the flow directions of the exhaust gas in the independent exhaust passage members 64 are along an obliquely forward and downward direction. When viewed in the left-right direction, the upstream collective exhaust passage member 65 is bent. The central axis of the catalyst portion 62 is referred to as a central axis C1. When viewed in the left-right direction, an inclination angle of the central axis C1 with respect to the up-down direction is referred to as an inclination angle θ1. The inclination angle θ1 is not limited to the angle shown in FIG. 3 and FIG. 5. The inclination angle θ1 is 0 degrees or greater than 0 degrees, and 45 degrees or less than 45 degrees. Due to this, when viewed in the left-right direction, the central axis C1 of the catalyst portion 62 is along the up-down direction when viewed in the left-right direction. The inclination angle θ1 may be greater than 45 degrees provided, however, the inclination angle θ1 is not greater than 90 degrees. That is to say, the central axis C1 of the catalyst portion 62 may be along the front-rear direction when viewed in the left-right direction. As shown in FIG. 4 and FIG. 6, when viewed in the front-rear direction, the central axis C1 of the catalyst portion 62 is substantially in parallel to the up-down direction. The central axis C1 of the catalyst portion 62 is along the up-down direction. In other words, the flow direction of the exhaust gas flowing in the catalyst portion 62 is along the up-down direction. To be more specific, the flow direction of the exhaust gas flowing in the catalyst portion 62 is the direction along the downward direction. The flow direction of the exhaust gas flowing in the catalyst portion 62 is obliquely rearward and downward . The center of the upstream end of the catalyst portion 62 is forward of the center of the downstream end of the catalyst portion 62 when viewed in the left-right direction. When viewed in the front-rear direction, the central axis C1 of the catalyst portion 62 may be tilted in the left-right direction with respect to the up-down direction. A first portion of the downstream collective exhaust passage member 66, the first portion being close to the catalyst portion 62, is bent when viewed in the left-right direction. The flow direction of exhaust gas in a second portion of the downstream collective exhaust passage member 66, the second portion being downstream of the bent first portion, is along the front-rear direction. When viewed in the left-right direction, the flow direction of exhaust gas in the second portion of the downstream collective exhaust passage member 66 is substantially in parallel to the front-rear direction.

The downstream end and its surroundings of the upstream collective exhaust passage member 65 are tapered so that the diameter increases downward. This tapered portion is formed at the first collective exhaust pipe 57. It is assumed that the cross-sectional area of the downstream end and its surroundings of the upstream collective exhaust passage member 65 cut along the direction orthogonal to the flow direction of the exhaust gas is a cross-sectional area A1. Furthermore, it is assumed that the cross-sectional area of the catalyst portion 62 cut along the direction orthogonal to the flow direction of the exhaust gas is a cross-sectional area A2. The cross-sectional area A1 is smaller than the cross-sectional area A2. The upstream end and its surroundings of the downstream collective exhaust passage member 66 are tapered so that the diameter decreases downward. It is assumed that the cross-sectional area of the upstream end and its surroundings of the downstream collective exhaust passage member 66 cut along the direction orthogonal to the flow direction of the exhaust gas is a cross-sectional area A3. The cross-sectional area A3 is smaller than the cross-sectional area A2.

The muffler member 67 is a device for reducing noise generated by exhaust gas. As shown in FIG. 10, a bracket 67b is provided on the upper surface of the muffler member 67. The bracket 67b is attached to the vehicle body frame 4. In other words, the muffler member 67 is supported by the vehicle body frame 4. The muffler member 67 includes an external cylinder 80 and a tail pipe 85. The external cylinder 80 is formed by welding the left and right components.

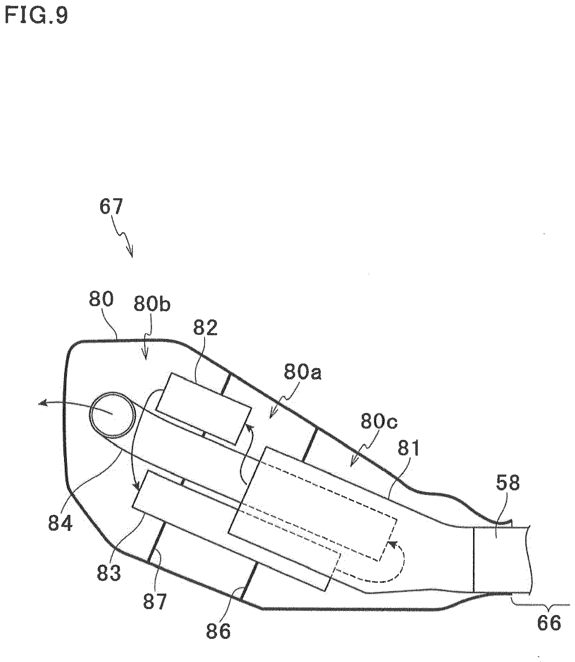

As shown in FIG. 9, the muffler member 67 includes four pipes 81 to 84 housed in the external cylinder 80. The inside of the external cylinder 80 is divided into three expansion chambers 80a, 80b, and 80c by two separators 86 and 87. The first pipe 81 is connected to the downstream end of the second collective exhaust pipe 58. A part of the second collective exhaust pipe 58, which is inside the external cylinder 80, is included in the muffler member 67. The first pipe 81 allows the second collective exhaust pipe 58 to communicate with the central first expansion chamber 80a among the three expansion chambers. The second pipe 82 allows the first expansion chamber 80a to communicate with the second expansion chamber 80b behind the first expansion chamber 80a. The third pipe 83 allows the second expansion chamber 80b to communicate with the third expansion chamber 80c in front of the first expansion chamber 80a. The fourth pipe 84 allows the third expansion chamber 80c to communicate with the tail pipe 85 (see FIG. 10). The fourth pipe 84 is bended inside the second expansion chamber 80b. The tail pipe 85 penetrates the right wall of the second expansion chamber 80b. In the second expansion chamber 80b, the tail pipe 85 is connected to the fourth pipe 84. The opening at the downstream end of the tail pipe 85 is the atmosphere discharge port 67a. The exhaust gas discharged from the second collective exhaust pipe 58 passes the first pipe 81, the first expansion chamber 80a, the second pipe 82, the second expansion chamber 80b, the third pipe 83, the third expansion chamber 80c, the fourth pipe 84, and the tail pipe 85 in this order. The exhaust gas is then discharged to the atmosphere through the atmosphere discharge port 67a. A sound absorbing material such as glass wool may or may not be provided between the inner surface of the external cylinder 80 and the outer surfaces of the four pipes 81 to 84. The internal structure of the muffler member 67 is not limited to the structure shown in FIG. 9.

Subsequently, the catalyst portion 62 is further detailed. As shown in FIG. 3, FIG. 4, FIG. 5 and FIG. 6, the catalyst portion 62 includes the main catalyst 62a and the cylindrical part 62b. The cylindrical part 62b is connected to the downstream end of the upstream collective exhaust passage member 65 and the upstream end of the downstream collective exhaust passage member 66. The cylindrical part 62b may be integrally molded with a part of the upstream collective exhaust passage member 65. The cylindrical part 62b may be integrally molded with a part of the downstream collective exhaust passage member 66. The exhaust device 60 does not include catalysts other than the main catalyst 62a. The main catalyst 62a purifies the exhaust gas most in a plurality of exhaust paths 69 (see FIG. 7).

The main catalyst 62a is formed to be cylindrical. The main catalyst 62a has a porous structure. The porous structure indicates a structure in which through holes are formed along the flow direction of the exhaust gas. The main catalyst 62a is a three-way catalyst. The three-way catalyst removes three substances in exhaust gas, namely hydrocarbon (HC), carbon monoxide (CO), and nitrogen oxide (NOx), by oxidation or reduction. The three-way catalyst is a type of oxidation-reduction catalyst. The main catalyst 62a may be a catalyst which removes one or two of hydrocarbon, carbon monoxide, and nitrogen oxide. The main catalyst 62a may not be an oxidation-reduction catalyst. The main catalyst may be an oxidation catalyst which removes harmful substances only by oxidation. The main catalyst may be a reduction catalyst which removes harmful substances only by reduction. The main catalyst 62a includes a base and catalyst materials attached to the surface of the base. The catalyst materials are formed of a carrier and noble metals. The carrier has a function of attaching noble metals to a base. The noble metal has a function of purifying the exhaust gas. Examples of noble metals include platinum, palladium, and rhodium which remove hydrocarbon, carbon monoxide, and nitrogen oxide, respectively. When the temperature of the main catalyst 62a is lower than a predetermined temperature, the main catalyst 62a is inactive and does not exert the purification performance. When the temperature of the main catalyst 62a is equal to or higher than the predetermined temperature, the main catalyst 62a is active and exerts the purification performance. The main catalyst 62a may be a metal-base catalyst or a ceramic-base catalyst. The metal-base catalyst is a catalyst in which the base is made of metal. The ceramic-base catalyst is a catalyst in which the base is made of ceramic. The base of the metal-base catalyst is formed by, for example, alternately stacking metal corrugated plates and metal flat plates and winding them. The base of the ceramic-base catalyst is, for example, a honeycomb structure body.

The central axis C1 of the catalyst portion 62 is coaxial with the central axis of the main catalyst 62a. The central axis C1 of the catalyst portion 62 indicates the central axis of the cylindrical part 62b. The length in the flow direction of the exhaust gas of the catalyst portion 62 is identical to the length in the flow direction of the exhaust gas of the main catalyst 62a. The center of the upstream end of the main catalyst 62a is identical in position to the center of the upstream end of the catalyst portion 62. The center of the downstream end of the main catalyst 62a is identical in position to the center of the downstream end of the catalyst portion 62. The length in the flow direction of the exhaust gas of the catalyst portion 62 is termed a length Dc1 (not illustrated). Furthermore, the maximum length in the direction orthogonal to the flow direction of the exhaust gas of the catalyst portion 62 is termed Dc2 (not illustrated). The length Dc1 is longer than the length Dc2.

As shown in FIG. 5, when viewed in the left-right direction, the catalyst portion 62 is provided in front of the engine main body 20. A plane which passes the uppermost end of the crankcase member 20a and is orthogonal to the up-down direction is termed a plane Se1. A plane which passes the lowermost end of the crankcase member 20a and is orthogonal to the up-down direction is termed a plane Se2. The catalyst portion 62 is provided between the plane Se1 and the plane Se2. When viewed in the left-right direction, the catalyst portion 62 is provided in front of the crankcase member 20a. The lower end of the catalyst portion 62 is positioned above the lower end of the engine main body 20. The lower end of the engine main body 20 is the lower end of the crankcase member 20a. The lower end of the catalyst portion 62 may be positioned below the lower end of the engine main body 20. As shown in FIG. 4 and FIG. 6, a plane which passes the leftmost end of the engine main body 20 and is orthogonal to the left-right direction is termed a plane Se3. The plane Se3 passes the leftmost end of the crankcase member 20a. A plane which passes the rightmost end of the engine main body 20 and is orthogonal to the left-right direction is termed a plane Se4. The plane Se4 passes the rightmost end of the crankcase member 20a. The catalyst portion 62 is provided between the plane Se3 and the plane Se4. When viewed from the front, a lower end portion of the catalyst portion 62 does not overlap the engine main body 20. When viewed from the front, the lower end portion of the catalyst portion 62 does not overlap the crankcase member 20a. A part of the catalyst portion 62 is provided in front of the engine main body 20. A part of the catalyst portion 62 is provided in front of the crankcase member 20a. The catalyst portion 62 may be entirely in front of the engine main body 20. At least a part of the catalyst portion 62 is preferably provided in front of the engine main body 20. The entire catalyst portion 62 may be provided in front of the crankcase member 20a. At least a part of the catalyst portion 62 is preferably provided in front of the crankcase member 20a.

When viewed in the left-right direction, the catalyst portion 62 is provided in front of the linear line La1. In other words, the catalyst portion 62 is provided forward of the crankshaft axis Cr. The catalyst portion 62 is provided below the crankshaft axis Cr. Only a part of the catalyst portion 62 may be provided below the crankshaft axis Cr. At least a part of the catalyst portion 62 is preferably provided below the crankshaft axis Cr. When viewed in the left-right direction, the catalyst portion 62 is provided in front of the cylinder axial line Cy. A linear line which is orthogonal to the cylinder axial line Cy and passes the crankshaft axis Cr when viewed in the left-right direction is termed a linear line La2. When viewed in the left-right direction, a part of the catalyst portion 62 is provided in front of (straight above) the linear line La2. When viewed in the left-right direction, the catalyst portion 62 may be entirely provided in front of the linear line La2. When viewed in the left-right direction, at least a part of the catalyst portion 62 is preferably provided in front of the linear line La2.

When viewed in the left-right direction, the linear line Lp passes the catalyst portion 62. The linear line Lp is an extension of the border line between the crankcase 21 and the oil pan 26 when the engine unit 11 is viewed in the left-right direction. When viewed in the left-right direction, the catalyst portion 62 may be entirely provided straight above (in front of) the linear line Lp. When viewed in the left-right direction, the catalyst portion 62 may be entirely provided straight below (behind) the linear line Lp.

As shown in FIG. 3 and FIG. 5, a line segment, which is the lowest one of line segments connecting points on the outline of the engine main body 20 with points on the outline of the front wheel unit 2 when viewed in the left-right direction, is referred to as a line segment Lw1. The line segment Lw1 connects the lowermost end of the engine main body 20 with a position in the vicinity of the lowermost end of the front wheel unit 2. When viewed in the left-right direction, the catalyst portion 62 is provided straight above the line segment Lw1. A line segment, which is the highest one of line segments connecting points on the outline of the engine main body 20 with points on the outline of the front wheel unit 2 when viewed in the left-right direction, is referred to as a line segment Lw2. The line segment Lw2 connects the uppermost end of the engine main body 20 with the uppermost end of the front wheel unit 2 or a position in the vicinity of the uppermost end of the front wheel unit 2. When viewed in the left-right direction, the catalyst portion 62 is provided straight below the line segment Lw2. When viewed in the left-right direction, the catalyst portion 62 is provided in a quadrangle having the line segment Lw1 and the line segment Lw2 as two sides. The quadrangle having the line segment Lw1 and the line segment Lw2 as two sides can be rephrased as a quadrangle in which apexes thereof are the ends of the line segment Lw1 and the ends of the line segment Lw2. When viewed in the left-right direction, the catalyst portion 62 is provided inside the above-described quadrangle and does not overlap the engine main body 20. In other words, when viewed in the left-right direction, the catalyst portion 62 is provided between the engine main body 20 and the front wheel unit 2. When viewed in the left-right direction, only a part of the catalyst portion 62 may be provided between the engine main body 20 and the front wheel unit 2. For example, a part of the catalyst portion 62 may be provided straight below the line segment Lw1. When viewed in the left-right direction, at least a part of the catalyst portion 62 is preferably provided between the engine main body 20 and the front wheel unit 2. When the front forks 6 and/or the rear suspension 8 expands and contracts, the relative position of the vehicle body frame 4 relative to the front wheel unit 2 is changed. The relative position of the engine unit 11 relative to the front wheel unit 2 is therefore changed. When viewed in the left-right direction, at least a part of the catalyst portion 62 is provided between the engine main body 20 and the front wheel unit 2 as described above. This, however, does not indicate that at least a part of the catalyst portion 62 is always provided in this way irrespective of the position of the engine unit 11 relative to the front wheel unit 2. This indicates that at least a part of the catalyst portion 62 is provided between the engine main body 20 and the front wheel unit 2 when viewed in the left-right direction when the position of the engine unit 11 is within a particular range relative to the front wheel unit 2.

As shown in FIG. 3 and FIG. 5, a horizontal plane passing the upper end of the front wheel unit 2 is termed a horizontal plane Sh1. The catalyst portion 62 is provided below the horizontal plane Sh1. That is, the catalyst portion 62 is provided below the upper end of the front wheel unit 2. This indicates that the catalyst portion 62 is provided below the horizontal plane Sh1 when the position of the engine unit 11 is within a particular range relative to the front wheel unit 2.

As shown in FIG. 3 and FIG. 5, a horizontal plane passing the center of the front wheel unit 2 is termed a horizontal plane Sh2. The horizontal plane Sh2 passes the catalyst portion 62. That is, at least a part of the catalyst portion 62 is provided below the horizontal plane Sh2. At least a part of the catalyst portion 62 may be provided straight above the horizontal plane Sh2. "At least a part of the catalyst portion 62 is provided below the horizontal plane Sh2" indicates that the catalyst portion 62 is provided below the horizontal plane Sh2 when the position of the engine unit 11 is within a particular range relative to the front wheel unit 2.

As shown in FIG. 4 and FIG. 6, the catalyst portion 62 is disposed at a right part of the motorcycle 1. The center of the upstream end and the center of the downstream end of the catalyst portion 62 are not disposed at the center C0 in the left-right direction of the motorcycle 1. The center of the upstream end and the center of the downstream end of the catalyst portion 62 are to the right of the center C0 in the left-right direction of the motorcycle 1. When viewed in the front-rear direction, at least a part of the catalyst portion 62 is provided to the right of the center C0 in the left-right direction of the motorcycle 1.

When viewed in the front-rear direction, the catalyst portion 62 overlaps the oil cooler 46. When viewed in the front-rear direction, the catalyst portion 62 does not overlap the oil filter 45. When viewed in the front-rear direction, the catalyst portion 62 is provided to the right of the oil filter 45. When the exhaust device 60 and the oil filter 45 are viewed from the front side, the oil filter 45 is exposed. Due to this, the oil filter 45 is easily detachable from the engine main body 20. An operation to replace the oil filter 45 can therefore be easily done. When viewed in the front-rear direction, a part of the exhaust device 60 may overlap the oil filter 45. Even in such a case, the oil filter 45 is easily detachable when compared to cases where the entire oil filter 45 is hidden behind the exhaust device 60. When the exhaust device 60 and the oil filter 45 are viewed from the front side, at least a part of the oil filter 45 is preferably exposed. This makes it less likely that the oil filter 45 is affected by the heat of the catalyst portion 62 even when the oil filter 45 is provided near the catalyst portion 62.

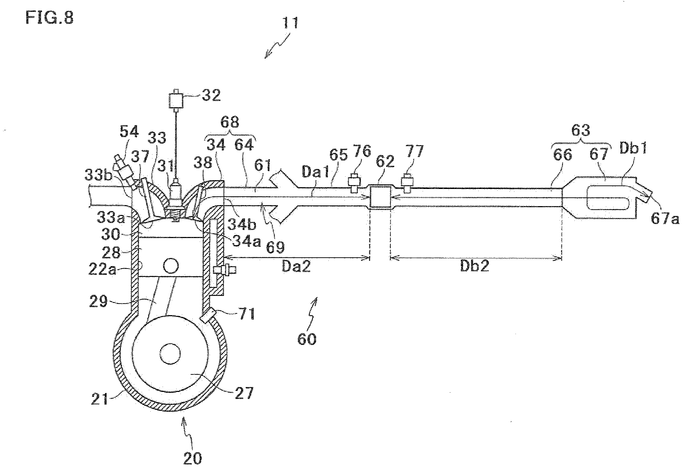

As shown in FIG. 8, an average of path lengths from the combustion chamber 30 to the upstream end of the catalyst portion 62 in the three exhaust paths 69 is termed a path length Da1. The path length from the downstream end of the catalyst portion 62 to the atmosphere discharge port 67a is termed a path length Db1. The path length Da1 is shorter than the path length Db1. An average of path lengths from the exhaust port 34b to the upstream end of the catalyst portion 62 in the three exhaust paths 69 is termed a path length Da2. The path length from the downstream end of the catalyst portion 62 to the upstream end of the muffler member 67 is termed a path length Db2. The path length Da2 is shorter than the path length Db2. The path length Da1 is shorter than the path length Db2. The path length Da1 may be longer than the path length Db2. The path length Da2 may be longer than the path length Db2. The path length in the expansion chamber of the muffler member 67 is defined as below. The path length in the first expansion chamber 80a from the downstream end of the first pipe 81 to the upstream end of the second pipe 82 is taken as an example. This path length is the length of the shortest path from the center of the downstream end of the first pipe 81 to the center of the upstream end of the second pipe 82. In other words, the path length in the expansion chamber in the muffler member 67 is the length of the path connecting the center of the inflow port of the expansion chamber with the center of the outflow port of the expansion chamber in the shortest distance.

As shown in FIG. 3 and the like, the exhaust device 60 includes an upstream oxygen sensor 76 and a downstream oxygen sensor 77. The upstream oxygen sensor 76 is provided on the upstream collective exhaust passage member 65. The upstream oxygen sensor 76 is configured to detect the oxygen density in the exhaust gas in the upstream collective exhaust passage member 65. The downstream oxygen sensor 77 is provided to the downstream collective exhaust passage member 66. The downstream oxygen sensor 77 is configured to detect the oxygen density in the exhaust gas in the downstream collective exhaust passage member 66. The exhaust device 60 may not include the downstream oxygen sensor 77.

The engine unit 11 includes a controller (not illustrated) configured to control operations of the engine unit 11. The controller is connected to sensors 71 to 77. The controller controls the operations of the engine unit 11 based on signals from the sensors 71 to 77. The controller controls the fuel injection amount of the injector 54 based on signals from the sensors including the upstream oxygen sensor 76. Signals from the downstream oxygen sensor 77 may be used for the control of the fuel injection amount. The controller determines the purification capability of the main catalyst 62a based on a signal from the downstream oxygen sensor 77. The controller may determine the purification capability of the main catalyst 62a based on a signal from the upstream oxygen sensor 76 and a signal from the downstream oxygen sensor 77. When determining that the purification capability of the main catalyst 62a is lower than a predetermined level, the controller transmits a signal to a display (not illustrated) provided to the handle unit 5. Then, a warning lamp (not illustrated) of the display is turned on. This prompts the rider to replace the main catalyst 62a. Furthermore, the controller controls the timings at which each ignition plug 31 discharges electricity. In addition, the controller controls electric conduction to the starter motor (not illustrated) so as to control the startup of the engine unit 11.

### [Structure of Vehicle Body Cover]

As described above, the vehicle body cover 100 includes the left catalyst cover 101 and the right catalyst cover 102. Each of the left catalyst cover 101 and the right catalyst cover 102 is a gently-curved plate-like member. The right catalyst cover 102 may be a single member or may be formed by a plurality of components. The same applies to the left catalyst cover 101.

As shown in FIG. 3 and FIG. 4, the outline of the right catalyst cover 102 when viewed in the left-right direction is formed by: a front end 102a; a rear end 102b; a lower end 102c; and an upper end 102d (see FIG. 4). Each of the front end 102a, the rear end 102b, the lower end 102c, and the upper end 102d is an edge of the right catalyst cover 102. In the present teaching, a "front end of the right catalyst cover" includes the front end 102a. In the present teaching, a "rear end of the right catalyst cover" includes the rear end 102b. As shown in FIG. 1, when viewed in the left-right direction, the upper end 102d of the right catalyst cover 102 is along the front-rear direction. To be more specific, when viewed in the left-right direction, the upper end 102d is inclined in the up-down direction with respect to the front-rear direction. When viewed in the left-right direction, the upper end 102d is inclined with a negative slope in the forward direction. Because the upper end 102d is inclined as above, the "front end of the right catalyst cover" in the present teaching may include both the front end 102a and the upper end 102d. The upper end 102d may be substantially in parallel to the front-rear direction when viewed in the left-right direction. Alternatively, the upper end 102d may be inclined with a positive slope in the forward direction when viewed in the left-right direction. In this alternative, a "rear end of the right catalyst cover" in the present teaching may include both the rear end 102b and the upper end 102d.

As shown in FIG. 3, when viewed in the left-right direction, the lower end 102c of the right catalyst cover 102 is along the front-rear direction. When viewed in the left-right direction, the lower end 102c is substantially in parallel to the front-rear direction. The lower end 102c may be inclined in the up-down direction with respect to the front-rear direction, when viewed in the left-right direction. For example, the lower end 102c may be inclined with a positive slope in the forward direction when viewed in the left-right direction. In this case, the "front end of the right catalyst cover" in the present teaching may include both the front end 102a and the lower end 102c. Alternatively, the lower end 102c may be inclined with a negative slope in the forward direction when viewed in the left-right direction. In this case, the "rear end of the right catalyst cover" in the present teaching may include both the rear end 102b and the lower end 102c.

As shown in FIG. 4, a lower portion of the right catalyst cover 102 is closer to the center C0 in the left-right direction of the front wheel unit 2 than an upper portion of the right catalyst cover 102. The right catalyst cover 102 is curved so that its lower portion is closer to the center C0 in the left-right direction of the front wheel unit 2 than its upper portion. As shown in FIG. 4, the front end 102a and the rear end 102b of the right catalyst cover 102 are closer to the center C0 in the left-right direction of the front wheel unit 2 than a middle portion in the front-rear direction of the right catalyst cover 102. The right catalyst cover 102 is curved so that the front end 102a and the rear end 102b are closer to the center C0 in the left-right direction of the front wheel unit 2 than the middle portion in the front-rear direction of the right catalyst cover 102.

As shown in FIG. 4, the outline of the left catalyst cover 101 when viewed in the left-right direction is formed by: a front end 101a; a rear end 101b; a lower end 101c; and an upper end 101d. The left catalyst cover 101 and the right catalyst cover 102 are designed to be substantially symmetrical in the left-right direction. For this reason, the above description of the shape of the right catalyst cover 102 is applicable to the left catalyst cover 101, with left-right reversal. The description of the shape of the left catalyst cover 101 is omitted here.

As shown in FIG. 4, the front end 102a of the right catalyst cover 102 is closer to the center C0 in the left-right direction of the front wheel unit 2 than the rear end 102b of the right catalyst cover 102. Subsequently, a freely-selected horizontal plane passing the catalyst portion 62 is termed a horizontal plane H1. A distance between the rear end 101b of the left catalyst cover 101 and the rear end 102b of the right catalyst cover 102 in the horizontal plane H1 is termed a distance D1. A distance between the front end 101a of the left catalyst cover 101 and the front end 102a of the right catalyst cover 102 in the horizontal plane H1 is termed a distanceD2. The distance D1 is longer than the distance D2. Wherever of the catalyst portion 62 the horizontal plane H1 passes, the distance D1 is longer than the distance D2. However, the vehicle body cover 100 may be arranged such that the distance D1 is longer than the distance D2 when the horizontal plane H1 passes a part of the catalyst portion 62. Alternatively, the distance D1 does not have to be longer than the distance D2 wherever of the catalyst portion 62 the horizontal plane H1 passes. That is, the vehicle body cover 100 may be arranged such that the distance D1 may be equal to or shorter than the distance D2. The rear end 102b of the right catalyst cover 102 may be closer to the center in the left-right direction of the front wheel unit 2 than the front end 102a of the right catalyst cover 102.

As shown in FIG. 1 and FIG. 3, the right catalyst cover 102 covers the engine main body 20 so that a rear portion of the crankcase member 20a of the engine main body 20 is exposed when viewed from the right. Although not illustrated, the left catalyst cover 101 covers the engine main body 20 so that the rear portion of the crankcase member 20a of the engine main body 20 is exposed when viewed from the left. As shown in FIG. 4, a plane which passes the leftmost end of the left catalyst cover 101 and is orthogonal to the left-right direction is termed a plane Sc1. The plane Sc1 is rightward of the plane Se3. The plane Se3 is a plane which passes the leftmost end of the engine main body 20 and is orthogonal to the left-right direction. A plane which passes the rightmost end of the right catalyst cover 102 and is orthogonal to the left-right direction is termed a plane Sc2. The plane Sc2 is leftward of the plane Se4. The plane Se4 is a plane which passes the rightmost end of the engine main body 20 and is orthogonal to the left-right direction. The maximum distance in the left-right direction between the front end 101a of the left catalyst cover 101 and the front end 102a of the right catalyst cover 102 is termed a distance Dmax. The distance Dmax is longer than the width in the left-right direction of the engine main body 20. The width in the left-right direction of the engine main body 20 is the distance in the left-right direction between the plane Se3 and the plane Se4. The width in the left-right direction of the engine main body 20 is the width in the left-right direction of the engine unit 11.

As shown in FIG. 3, the right catalyst cover 102 covers a part of the catalyst portion 62 when viewed from the right. The right catalyst cover 102 covers the catalyst portion 62 so that an upper end portion of a front portion of the catalyst portion 62 is exposed when viewed from the right. A line segment, which is the lowest one of line segments connecting points on the outline of the catalyst portion 62 with points on the outline of the front wheel unit 2 when viewed in the left-right direction, is referred to as a line segment Lc1. A line segment, which is the highest one of line segments connecting points on the outline of the catalyst portion 62 with points on the outline of the front wheel unit 2 when viewed in the left-right direction, is referred to as a line segment Lc2. When viewed from the right, a part of the front end 102a of the right catalyst cover 102 is in an area of a quadrangle having the line segment Lc1 and the line segment Lc2 as two sides. When viewed from the right, a part of the front end 102a of the right catalyst cover 102 is in the area of the quadrangle having the line segment Lc1 and the line segment Lc2 as two sides, and does not overlap the catalyst portion 62 and the front wheel unit 2. In other words, when viewed from the right, a part of the front end 102a of the right catalyst cover 102 is provided between the catalyst portion 62 and the front wheel unit 2. When viewed from the right, a part of the front end 102a of the right catalyst cover 102 is provided in front of the catalyst portion 62. When viewed in from the right, a part of the catalyst portion 62 is provided behind the front end 102a of the right catalyst cover 102.

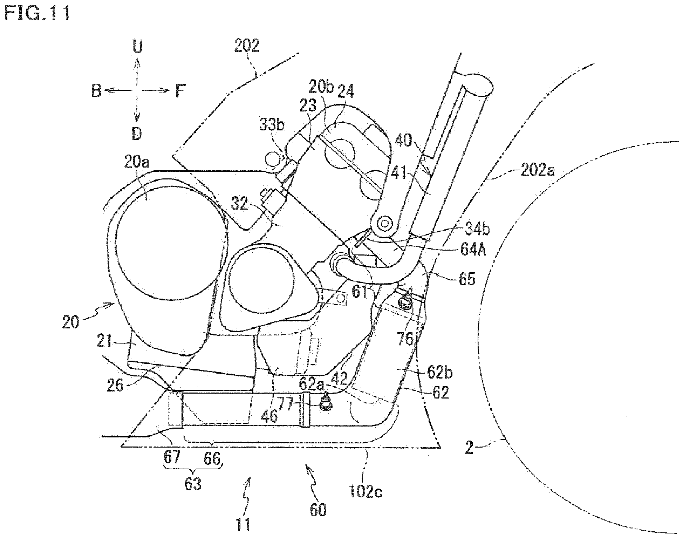

As described above, the right catalyst cover 102 covers a part of the catalyst portion 62 when viewed from the right. However, an alternative right catalyst cover 202 shown in FIG. 11 is also possible. The right catalyst cover 202 covers the entirety of the catalyst portion 62 when viewed from the right. In this case, the entirety of the catalyst portion 62 is provided behind a front end 202a of the right catalyst cover 202 when viewed from the right. A part of the front end 202a of the right catalyst cover 202 is provided between the catalyst portion 62 and the front wheel unit 2 when viewed from the right. It is preferable that at least a part of the catalyst portion 62 is covered with the right catalyst cover 102, 202, when viewed from the right. It is preferable that at least a part of the catalyst portion 62 is provided behind the front end 102a, 202a of the right catalyst cover 102, 202 when viewed from the right.

Similarly to the right catalyst cover 102, the left catalyst cover 101 covers a part of the catalyst portion 62 when viewed from the left. A part of the front end 101a of the left catalyst cover 101 is provided between the catalyst portion 62 and the front wheel unit 2 when viewed from the left. Positional relationships between the left catalyst cover 101 and the catalyst portion 62 other than the above are also similar to those between the right catalyst cover 102 and the catalyst portion 62 described above, except that there is a left-right reversal. Accordingly, the description of the positional relationships is omitted here.

As shown in FIG. 4, when viewed from the front, the catalyst portion 62 is provided between the front end 101a of the left catalyst cover 101 and the front end 102a of the right catalyst cover 102. Suppose that the vehicle body cover 100, the engine unit 11, and the exhaust device 60 are viewed from the front. When viewed as above, the entirety of the catalyst portion 62 is exposed, i.e., visible, between the front end 101a of the left catalyst cover 101 and the front end 102a of the right catalyst cover 102. Furthermore, when viewed from the front, the right end of the catalyst portion 62 is to the right of the right end of the front wheel unit 2. Subsequently, suppose that the vehicle body cover 100, the engine unit 11, the exhaust device 60, and the front wheel unit 2 are viewed from the front. When viewed as above, a part of the catalyst portion 62 is exposed, i.e., visible, between the front end 102a of the right catalyst cover 102 and the right end of the front wheel unit 2.

Alternatively, when the vehicle body cover 100, the engine unit 11, and the exhaust device 60 are viewed from the front, only a part of the catalyst portion 62 may be exposed between the front end 101a of the left catalyst cover 101 and the front end 102a of the right catalyst cover 102. In this case, it is preferable that a half or more of the catalyst portion 62 is exposed. For example, the right catalyst cover 102 may cover a part of the catalyst portion 62 when viewed from the front. Alternatively, when viewed from the front, a part of the radiator 41 of the engine unit 11 may cover a part of the catalyst portion 62, for example. Note that "a half or more of the catalyst portion 62 is exposed" means that a half or more of the surface area of the catalyst portion 62 in a front view is exposed.

The motorcycle 1 of the present embodiment having been described above has the following characteristics.
At least a part of the catalyst portion 62 is provided between the engine main body 20 and the front wheel unit 2 when viewed in the left-right direction. Due to this, the path length from the combustion chambers 30 of the engine main body 20 to the catalyst portion 62 is short. For this reason, the exhaust gas at a higher temperature flows into the catalyst portion 62. Accordingly, it is possible to shorten the time required to activate the deactivated main catalyst 62a at the cold start of the engine unit 11.
The length in the left-right direction of the front wheel unit 2 is shorter than the maximum length in the left-right direction of the engine unit 11. The front wheel unit 2 is provided in front of the engine unit 11 when viewed in the left-right direction. During the running of the motorcycle 1, airflow to the vehicle is branched at a front end of the front wheel unit 2 into left and right air streams, which flow rearward while spreading. With the use of the airflow, the catalyst portion 62 and the vehicle body cover 100 are provided as follows.

The left catalyst cover 101 of the vehicle body cover 100 covers at least a part of the catalyst portion 62 when viewed from the left. The right catalyst cover 102 of the vehicle body cover 100 covers at least a part of the catalyst portion 62 when viewed from the right. The above arrangement makes it possible to reduce the direct subjection of the catalyst portion 62 to airflow from the left and right, during the running of the motorcycle 1. Moreover, at least a part of the front end 101a of the left catalyst cover 101 is provided between the catalyst portion 62 and the front wheel unit 2 when viewed from the left. Furthermore, at least a part of the front end 102a of the right catalyst cover 102 is provided between the catalyst portion 62 and the front wheel unit 2 when viewed from the right. Because of this, during the running of the motorcycle 1, it is possible to reduce the direct subjection of the catalyst portion 62 to airflow from the front, which has passed the left or right side of the front wheel unit 2 and has been drawn to a space behind the front wheel unit 2. Accordingly, it is possible to reduce the direct subjection of the catalyst portion 62 to airflow not only from the left and right but also from the front, during the running of the motorcycle 1. The maximum distance Dmax is the maximum distance in the left-right direction between the front end 101a of the left catalyst cover 101 and the front end 102a of the right catalyst cover 102. The vehicle body cover 100 is designed so that the distance Dmax is shorter than the maximum length in the left-right direction of the engine main body 20. That is, the distance in the left-right direction between the front end 101a of the left catalyst cover 101 and the front end 102a of the right catalyst cover 102 is relatively short. This makes it possible to reduce the entry of the airflow generated by the running of the motorcycle 1 into a gap between the front end 101a of the left catalyst cover 101 and the front end 102a of the right catalyst cover 102. It is therefore possible to further reduce the direct subjection of the catalyst portion 62 to airflow from the front.
In addition to the above, at least a part of the catalyst portion 62 is provided between the engine main body 20 and the front wheel unit 2 when viewed in the left-right direction. Furthermore, the catalyst portion 62 is provided below the upper end of the front wheel unit 2. By means of the front wheel unit 2, it is possible to further reduce the direct subjection of the catalyst portion 62 to airflow, during the running of the motorcycle 1.

Thus, the catalyst portion 62 is prevented from being directly subjected to airflow during the running of the motorcycle 1, and therefore it is possible to minimize the temperature drop of the catalyst portion 62 during the running of the motorcycle 1.
Furthermore, when the vehicle body cover 100, the engine main body 20, and the exhaust device 60 are viewed from the front, a half or more of the catalyst portion 62 is exposed between the front end 101a of the left catalyst cover 101 and the front end 102a of the right catalyst cover 102. Designing the exhaust device 60 and the vehicle body cover 100 as above enables the catalyst portion 62 to be subjected to an appropriate volume of air during the running of the motorcycle 1. Thus, during the running of the motorcycle 1, it is possible to minimize the thermal effect made on the vehicle parts provided near the catalyst portion 62 and the deterioration of the main catalyst 62a, while minimizing the temperature drop of the catalyst portion 62. Designing the exhaust device 60 and the vehicle body cover 100 as above makes it more likely that the heat of the catalyst portion 62 is radiated forward. For this reason, it is less likely that hot air is retained around the catalyst portion 62 when the motorcycle 1 stops after running. This enables the minimization of the thermal effect on the vehicle parts provided near the catalyst portion 62, after the motorcycle has stopped running. Thus, even though the catalyst portion 62 is provided in front of the engine main body 20, it is possible to minimize the thermal effect made, after the motorcycle 1 has stopped running, on the vehicle parts provided near the catalyst portion 62, while minimizing the temperature drop of the catalyst portion 62 during the running of the motorcycle 1.
For the above described reasons, the motorcycle 1 of the present embodiment makes it possible to shorten the period of time required to activate the deactivated catalyst in the catalyst portion 62, while minimizing: the thermal effect on vehicle parts provided near the catalyst portion 62; and deterioration of the main catalyst 62a. The vehicle parts provided near the catalyst portion 62 include the vehicle body cover 100.

When the vehicle body cover 100, the engine main body 20, the exhaust device 60, and the front wheel unit 2 are viewed from the front, at least a part of the catalyst portion 62 is exposed between the front end 101a of the left catalyst cover 101 and the left end of the front wheel unit 2. Alternatively, when the vehicle body cover 100, the engine main body 20, the exhaust device 60, and the front wheel unit 2 are viewed from the front, at least a part of the catalyst portion 62 is exposed between the front end 102a of the right catalyst cover 102 and the right end of the front wheel unit 2. Designing the exhaust device 60 and the vehicle body cover 100 as above makes it further more likely that the heat of the catalyst portion 62 is radiated forward. For this reason, it is further less likely that hot air is retained around the catalyst portion 62 when the motorcycle 1 stops after running. It is therefore possible to further minimize the thermal effect made on the vehicle parts provided near the catalyst portion 62 and the deterioration of the main catalyst 62a.

When viewed in the front-rear direction, the center of the upstream end of the catalyst portion 62 and the center of the downstream end of the catalyst portion 62 are both positioned to the right of the center C0 in the left-right direction of the front wheel unit 2. That is, when viewed in the front-rear direction, the catalyst portion 62 is provided at a rightish or leftish position in the motorcycle 1. Suppose a case in which the central axis C1 of the catalyst portion 62 is positioned straight behind the center C0 in the left-right direction of the front wheel unit 2. When compared with this case, the above-described arrangement makes it easier to implement the configuration in which a part of the catalyst portion 62 is exposed between the left or right catalyst cover 101, 102 and the front wheel unit 2. Due to this, it is further more likely that the heat of the catalyst portion 62 is radiated forward. As described above, a half or more of the catalyst portion 62 is exposed between the front end 101a of the left catalyst cover 101 and the front end 102a of the right catalyst cover 102 when viewed from the front. For this reason, it is further less likely that hot air is retained around the catalyst portion 62 when the motorcycle 1 stops after running. It is therefore possible to further minimize the thermal effect made on the vehicle parts provided near the catalyst portion 62 and the deterioration of the main catalyst 62a.

The catalyst portion 62 is disposed so that the flow direction of the exhaust gas flowing in the catalyst portion 62 is along the up-down direction. The length in the up-down direction of the catalyst portion 62 in this arrangement is longer than that in cases where the catalyst portion 62 is disposed so that the flow direction of the exhaust gas flowing in the catalyst portion 62 is along the front-rear direction. The catalyst portion 62 disposed so as to have such a long length in the up-down direction has a large surface area when viewed from the front, i.e., in a front view. Due to this, it is further more likely that the heat of the catalyst portion 62 is radiated forward. As described above, a half or more of the catalyst portion 62 is exposed between the front end 101a of the left catalyst cover 101 and the front end 102a of the right catalyst cover 102 when viewed from the front. For this reason, it is further less likely that hot air is retained around the catalyst portion 62 when the motorcycle 1 stops after running. It is therefore possible to further minimize the thermal effect made on the vehicle parts provided near the catalyst portion 62 and the deterioration of the main catalyst 62a.

In general, to provide a catalyst portion in front of an engine main body in a motorcycle, a large space is needed between a front wheel unit and the engine main body. This arrangement therefore tends to result in an increase in size in the front-rear direction of the motorcycle. However, in the present embodiment, the catalyst portion 62 is disposed so that the flow direction of the exhaust gas flowing in the catalyst portion 62 is along the up-down direction. The catalyst portion 62 is therefore short in the front-rear direction. Accordingly, it is possible to prevent a large increase in the size of the space between the front wheel unit 2 and the engine main body 20. It is therefore possible to restrain an increase in size of the motorcycle 1 in the front-rear direction even though the catalyst portion 62 is provided in front of the engine main body 20.

The engine main body 20 is disposed so that each cylinder axial line Cy is along the up-down direction. In general, the engine main body 20 is long in the direction of the cylinder axial line Cy. Accordingly, in the arrangement of the embodiment, the length in the up-down direction of the engine main body 20 is long when compared with cases where the engine main body 20 is disposed so that each cylinder axial line Cy is along the front-rear direction. The engine main body 20 disposed so as to have such a long length in the up-down direction has a large surface area when viewed from the front, i.e., in a front view. Due to this, it is further more likely that the heat of the combustion chambers 30 is radiated forward from a front surface of the engine main body 20. As described above, a half or more of the catalyst portion 62 is exposed between the front end 101a of the left catalyst cover 101 and the front end 102a of the right catalyst cover 102 when viewed from the front. For this reason, it is further less likely that hot air is retained around the catalyst portion 62 when the motorcycle 1 stops after running.
If the engine main body is disposed so that each cylinder axial line is along the front-rear direction, the length in the front-rear direction of the engine main body is long. Because of this, the heat of the combustion chamber is more likely to be radiated downward from an under surface of the engine main body. In this case, hot air tends to be retained in a space between the ground surface and the engine main body when the motorcycle stops after running. The hot air having been retained in the space between the ground surface and the engine main body spreads horizontally along the ground surface. Because of this, in the arrangement in which the catalyst portion is provided in front of the engine main body, hot air is more likely to be retained in a space between the catalyst portion and the ground surface. That is to say, hot air is more likely to be retained around the catalyst portion.
In this regard, however, in the present embodiment, the heat of the combustion chambers 30 is more likely to be radiated forward from the front surface of the engine main body 20. In front of the engine main body 20, there is no large shield, which is as large as the ground surface. Furthermore, because the heat of the engine main body 20 is less likely to be radiated downward, hot air is less likely to be retained in the space between the engine main body 20 and the ground surface. Accordingly, in the arrangement of the present embodiment, hot air is further less likely to be retained around the catalyst portion 62 when compared with cases where the engine main body 20 is disposed so that each cylinder axial line Cy is along the front-rear direction. It is therefore possible to further minimize the thermal effect made on the vehicle parts provided near the catalyst portion 62 and the deterioration of the main catalyst 62a.

In general, to provide a catalyst portion in front of an engine main body in a motorcycle, a large space is needed between a front wheel unit and the engine main body. The above arrangement therefore tends to result in an increase in size in the front-rear direction of the motorcycle. In this regard, however, the engine main body 20 of the present embodiment is disposed so that each cylinder axial line Cy is along the up-down direction. The engine main body 20 is therefore short in the front-rear direction. This makes it possible to restrain the increase in size of the motorcycle 1 even when a large space is provided between the front wheel unit 2 and the engine main body 20. It is therefore possible to restrain the increase in size of the motorcycle 1 in the front-rear direction even though the catalyst portion 62 is provided in front of the engine main body 20.

The catalyst portion 62 is provided forward of the crankshaft axis Cr. This makes it possible to further shorten the path length from the combustion chambers 30 to the catalyst portion 62. For this reason, the exhaust gas at an even higher temperature flows into the catalyst portion 62. Accordingly, it is possible to further shorten the time required to activate the deactivated main catalyst 62a at the cold start of the engine unit 11.

At least a part of the catalyst portion 62 is provided in front of the crankcase member 20a. It is assumed that the catalyst portion 62 is provided in front of the cylinder portion 20b and not provided in front of the crankcase member 20a. In this case, the path length Da1 from the combustion chamber 30 to the catalyst portion 62 is too short. When the path length Da1 from the combustion chamber 30 to the catalyst portion 62 is too short, the temperature of the exhaust gas flowing into the main catalyst 62a may be too high. As a result, the main catalyst 62a may deteriorate due to excessive heat. When at least a part of the catalyst portion 62 is provided in front of the crankcase member 20a, the deterioration of the main catalyst 62a due to excessive heating is prevented, heat.

When viewed in the left-right direction, at least a part of the catalyst portion 62 is provided in front of the linear line La2. Due to this, the path length from the combustion chamber 30 to the catalyst portion 62 is shortened when compared to cases where the catalyst portion 62 is entirely provided behind the linear line La2 when viewed in the left-right direction. For this reason, the temperature of the exhaust gas flowing into the main catalyst 62a is increased. As a result, at the cold start of the engine unit 11, the time required to activate the deactivated main catalyst 62a is shortened.
If the entirety of the catalyst portion 62 is provided behind the linear line La2 when viewed in the left-right direction, the lower end of the catalyst portion 62 may be significantly lower than the lower end of the engine main body 20. In such a case, it is necessary to increase the size of the motorcycle 1 in the up-down direction in order to provide for a sufficient distance between the catalyst portion 62 and the ground. Because at least a part of the catalyst portion 62 is provided in front of the linear line La2 when viewed in the left-right direction, the increase in size of the motorcycle 1 in the up-down direction is restrained.

As described above, in the horizontal plane H1 passing the catalyst portion 62, the distance D1 is longer than the distance D2. The distance D1 is the distance in the left-right direction between the rear end 101b of the left catalyst cover 101 and the rear end 102b of the right catalyst cover 102 in the horizontal plane H1. The distance D2 is the distance in the left-right direction between the front end 101a of the left catalyst cover 101 and the front end 102a of the right catalyst cover 102 in the horizontal plane H1. Because the distance D1 is longer, it is easier to ensure a gap between a member covered with a rear portion of the left catalyst cover 101 and the rear end 101b of the left catalyst cover 101. This makes it easier to discharge the hot air, which is between the left catalyst cover 101 and the catalyst portion 62, rearward through the rear end 101b of the left catalyst cover 101. Because the distance D1 is longer, it is easier to ensure a gap between a member covered with a rear portion of the right catalyst cover 102 and the rear end 102b of the right catalyst cover 102. This makes it easier to discharge the hot air, which is between the right catalyst cover 102 and the catalyst portion 62, rearward through the rear end 102b of the right catalyst cover 102. For the above reasons, it is less likely that hot air is retained around the catalyst portion 62 when the motorcycle 1 stops after running. It is therefore possible to further minimize the thermal effect made on the vehicle parts provided near the catalyst portion 62 and the deterioration of the main catalyst 62a.

### (Modification 1)

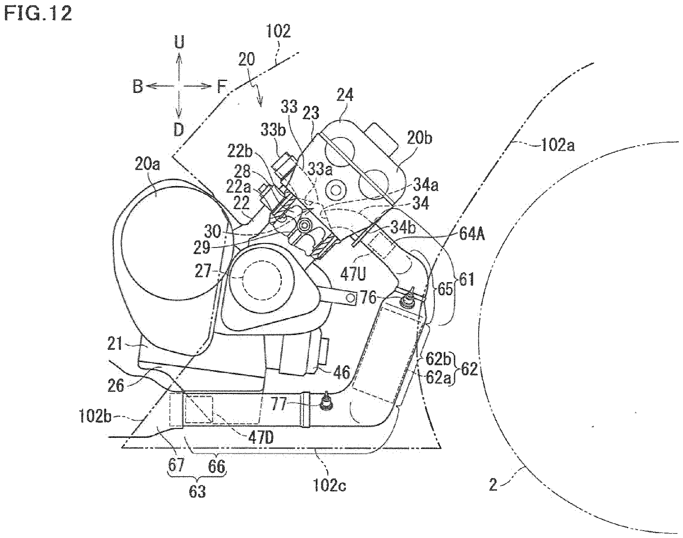

FIG. 12 is a right side view of a part of an engine unit of Modification 1 of the embodiment above. In Modification 1, members identical to those in the embodiment above are indicated by the same reference numerals and detailed descriptions thereof are omitted.

As shown in FIG. 12, an engine unit of Modification 1 includes a downstream sub-catalyst 47D and an upstream sub-catalyst 47U. In the following explanations, the upstream sub-catalyst 47U and the downstream sub-catalyst 47D may be collectively termed sub-catalysts 47 (not illustrated).

The upstream sub-catalyst 47U is provided upstream of the catalyst portion 62. The upstream sub-catalyst 47U is provided in the upstream exhaust passage member 61. The upstream sub-catalyst 47U is provided in at least one of the independent exhaust passage members 64. The upstream sub-catalyst 47U may be provided in the upstream collective exhaust passage member 65. The upstream sub-catalyst 47U may be provided in at least one of the internal exhaust passage members 34. The upstream sub-catalyst 47U is provided upstream of the upstream oxygen sensor 76.

The downstream sub-catalyst 47D is provided downstream of the catalyst portion 62. The downstream sub-catalyst 47D is provided in the downstream exhaust passage member 63. The downstream sub-catalyst 47D is provided in the downstream collective exhaust passage member 66. The downstream sub-catalyst 47D may be provided in the muffler member 67. The downstream sub-catalyst 47D is provided downstream of the downstream oxygen sensor 77.

The sub-catalysts 47 are configured to purify the exhaust gas. The sub-catalysts 47 include a catalyst material which is identical to that in the main catalyst 62a. The sub-catalysts 47 may have a porous structure in the same manner as the main catalyst 62a. The sub-catalysts 47 may not have a porous structure. The following is an example of a sub-catalyst 47 which does not have a porous structure. For example, the sub-catalyst 47 solely includes a catalyst material which is adhered to the inner surface of the downstream exhaust passage member 63. In this case, the base to which the catalyst material of the sub-catalyst 47 is adhered is the downstream exhaust passage member 63. The following is another example of a sub-catalyst 47 which does not have a porous structure. For example, a sub-catalyst 47 is structured by arranging a catalyst material to be adhered to a plate-shaped base. The cross-sectional shape of the plate-shaped base cut along the direction orthogonal to the flow direction of the exhaust gas is, for example, circular, C-shaped, or S-shaped.

According to Modification 1, the main catalyst 62a purifies the exhaust gas most in the plurality of exhaust paths 69. In other words, the main catalyst 62a purifies the exhaust gas discharged from the combustion chamber 30 in the exhaust paths 69 more than the sub-catalysts 47. To put it differently, the degree of the contribution of the sub-catalysts 47 to the purification of the exhaust gas is lower than that of the main catalyst 62a. The degree of the contribution to the purification of each of the main catalyst 62a, the upstream sub-catalyst 47U, and the downstream sub-catalyst 47D may be measured by the following method.

The engine unit of Modification 1 is driven and, in a warm-up state, the density of harmful substances in the exhaust gas discharged from the atmosphere discharge port 67a is measured. The warm-up state indicates a state in which the temperature of the engine main body 20 is sufficiently high. The method of measuring the exhaust gas is in compliance with European regulations. When the engine unit is in the warm-up state, the main catalyst 62a and the sub-catalysts 47 are hot and activated. The main catalyst 62a and the sub-catalysts 47 can therefore sufficiently exert their purification performances in the warm-up state.

Subsequently, the downstream sub-catalyst 47D is detached from the engine unit of Modification 1 and only the base of the downstream sub-catalyst 47D is provided in place of the downstream sub-catalyst 47D. The engine unit in this state is assumed to be a measurement engine unit A. This measurement engine unit A is driven, and the density of harmful substances in the exhaust gas discharged from the atmosphere discharge port 67a is measured in the warm-up state.
The downstream sub-catalyst 47D may be arranged such that the catalyst material is directly adhered to the inner surface of the downstream exhaust passage member 63. In this case, "only the base of the downstream sub-downstream sub-catalyst 47D is provided" indicates that no catalyst material is adhered to the inner surface of the downstream exhaust passage member 63.

Subsequently, the main catalyst 62a is detached from the measurement engine unit A, and only the base of the main catalyst 62a is provided in place of the main catalyst 62a. The engine unit in this state is assumed to be a measurement engine unit B. This measurement engine unit B is driven, and the density of harmful substances in the exhaust gas discharged from the atmosphere discharge port 67a is measured in the warm-up state.

Subsequently, the upstream sub-catalyst 47U is detached from the measurement engine unit B, and only the base of the upstream sub-catalyst 47U is provided in place of the upstream sub-catalyst 47U. The engine unit in this state is assumed to be a measurement engine unit C. This measurement engine unit C is driven, and the density of harmful substances in the exhaust gas discharged from the atmosphere discharge port 67a is measured in the warm-up state.

The measurement engine unit C includes neither the main catalyst 62a nor the sub-catalysts 47. The measurement engine unit B includes the upstream sub-catalyst 47U but does not include the main catalyst 62a and the downstream sub-catalyst 47D. The measurement engine unit A includes the main catalyst 62a and the upstream sub-catalyst 47U but does not include the downstream sub-catalyst 47D. Due to this, the degree of the contribution to the purification of the downstream sub-catalyst 47D is calculated from a difference between a measurement result of the engine unit of Modification 1 and a measurement result of the measurement engine unit A. Furthermore, the degree of the contribution to the purification of the main catalyst 62a is calculated from a difference between a measurement result of the measurement engine unit A and a measurement result of the measurement engine unit B. Furthermore, the degree of the contribution to the purification of the upstream sub-catalyst 47U is calculated from a difference between a measurement result of the measurement engine unit B and a measurement result of the measurement engine unit C.

The main catalyst 62a purifies the exhaust gas most in the plurality of exhaust paths 69. As long as this condition is satisfied, the purification capability of the sub-catalysts 47 may be lower than or higher than the purification capability of the main catalyst 62a. A state in which the purification capability of the sub-catalysts 47 is lower than the purification capability of the main catalyst 62a indicates the following state. That is to say, the exhaust gas discharged from the atmosphere discharge port 67a when only a sub-catalyst is provided is purified more than the exhaust gas discharged from the atmosphere discharge port 67a when only the main catalyst 62a is provided.

The upstream catalyst deteriorates more rapidly than the downstream catalyst. For this reason, when hours of use become high, the magnitude correlation between the degree of the contribution to the purification of the main catalyst 62a and the degree of the contribution to the purification of the downstream sub-catalyst 47D may be reversed. For this reason, the state in which the degree of the contribution to the purification of the main catalyst 62a is higher than that of the downstream sub-catalyst 47D is defined as below. That is to say, this state is a state in which, when the running distance has not reached a predetermined distance (e.g., 1000km), the degree of the contribution to the purification of the main catalyst 62a is higher than that of the downstream sub-catalyst 47D.

The volume of the main catalyst 62a is preferably larger than the volume of the sub-catalyst 47. The surface area of the main catalyst 62a is preferably larger than the surface area of the sub-catalyst 47. The amount of noble metals in the main catalyst 62a is preferably larger than the amount of noble metals in the sub-catalyst.

The engine unit may include only one of the upstream sub-catalyst 47U and the downstream sub-catalyst 47D. In such a case, the degree of the contribution to purification can be calculated by a method which is a modification of the method above.

In Modification 1, because the downstream sub-catalyst 47D is provided, it is possible to downsize the main catalyst 62a while maintaining the exhaust gas purification performance, when compared with cases where the downstream sub-catalyst 47D is not provided. Downsizing of the catalyst portion 62 increases the degree of freedom in position of the catalyst portion 62. Therefore, it is possible to position the catalyst portion 62 so that the path length from the combustion chamber 30 to the catalyst portion 62 is even shorter. Accordingly, it is possible to further shorten the time required to activate the deactivated main catalyst 62a at the cold start of the engine unit 11.

Because the upstream sub-catalyst 47U is provided, it is possible to downsize the main catalyst 62a while maintaining the exhaust gas purification performance, when compared with cases where the upstream sub-catalyst 47U is not provided. Downsizing of the catalyst portion 62 increases the degree of freedom in position of the catalyst portion 62. Therefore, it is possible to position the catalyst portion 62 so that the path length from the combustion chamber 30 to the catalyst portion 62 is even shorter. Accordingly, it is possible to further shorten the time required to activate the deactivated main catalyst 62a at the cold start of the engine unit 11.

### (Modification 2)

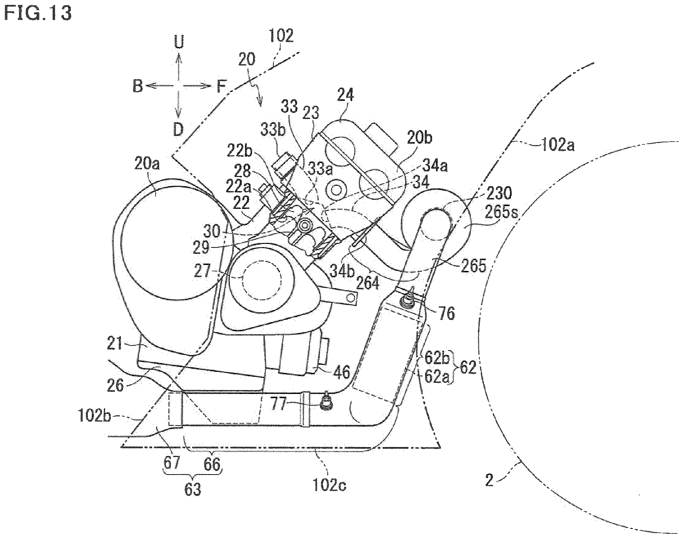

FIG. 13 is a right side view of a part of an engine unit of Modification 2 of the embodiment above. In Modification 2, members identical to those in the embodiment above are indicated by the same reference numerals and detailed descriptions thereof are omitted.

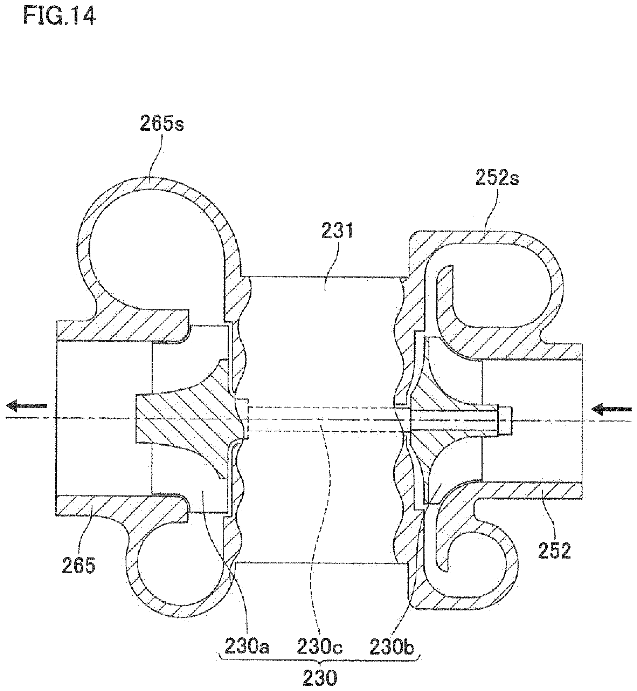

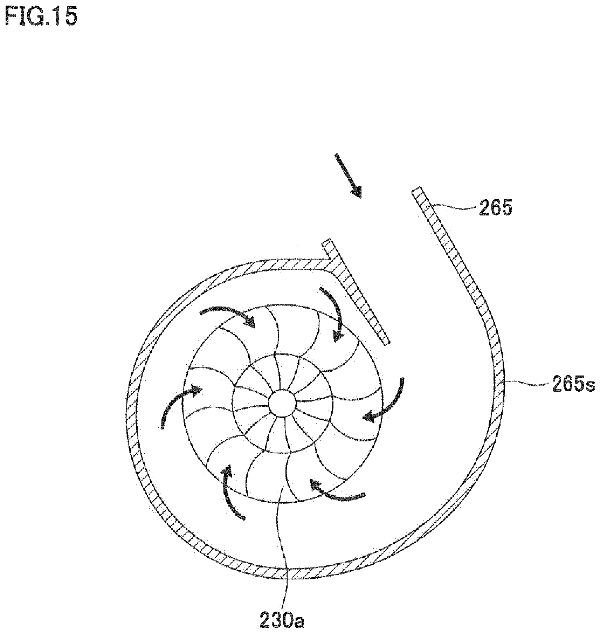

As shown in FIG. 13, an engine unit of Modification 2 includes a turbocharger 230. As shown in FIG. 14, the turbocharger 230 includes a turbine wheel 230a, a compressor wheel 230b, and a connecting shaft 230c. The turbine wheel 230a is connected to the compressor wheel 230b via the connecting shaft 230c. The turbine wheel 230a is provided in an upstream collective exhaust passage member 265. The upstream collective exhaust passage member 265 is connected to the downstream ends of three independent exhaust passage members 264. The upstream collective exhaust passage member 265 and the independent exhaust passage members 264 are provided in place of the upstream collective exhaust passage member 65 and the independent exhaust passage members 64 of the embodiment above. The compressor wheel 230b is provided in an intake passage member 252. The intake passage member 252 is provided in place of the intake passage member 52 of the embodiment above. The connecting shaft 230c is housed in a center housing 231. The center housing 231 is connected to the upstream collective exhaust passage member 265 and the intake passage member 252. The connecting shaft 230c is rotatably supported by the center housing 231. The upstream collective exhaust passage member 265 includes a scroll exhaust passage member 265s. As shown in FIG. 15, the scroll exhaust passage member 265s is formed to surround the outer circumference of the turbine wheel 230a. The intake passage member 252 includes a scroll intake passage member 252s. The scroll intake passage member 252s is formed to surround the outer circumference of the compressor wheel 230b. The exhaust gas in the scroll exhaust passage member 265s is blown onto the outer periphery of the turbine wheel 230a. As a result of this, the turbine wheel 230a rotates. The exhaust gas blown onto the outer periphery of the turbine wheel 230a is discharged from the turbine wheel 230a in the direction along the central axis of the connecting shaft 230c. In accordance with the rotation of the turbine wheel 230a, the compressor wheel 230b rotates. As a result, the compressor wheel 230b sucks air in the direction along the central axis of the connecting shaft 230c. The sucked air is compressed by the compressor wheel 230b. The compressed air is discharged from the outer periphery of the compressor wheel 230b to the scroll intake passage member 252s.

According to Modification 2, compressed air is supplied to the combustion chamber 30 thanks to the turbocharger 230. The intake efficiency is therefore improved. As a result, the output of the engine is improved. Furthermore, because compressed air is supplied to the combustion chamber 30, the cubic capacity of the engine main body 20 can be decreased. The fuel consumption is therefore decreased.

The scroll exhaust passage member 265s shown in FIG. 14 is of a single-scroll type in which only one port is provided to introduce exhaust gas. The scroll exhaust passage member may be of a twin-scroll type in which two ports are provided to introduce exhaust gas. The following will describe this with the assumption that the number of combustion chambers 30 is two. The twin-scroll-type scroll exhaust passage member includes a first scroll passage member and a second scroll passage member. The first scroll passage member and the second scroll passage member are formed in two independent exhaust passage members 264, respectively. The turbine wheel 230a is provided in an upstream collective exhaust passage member 265. The first scroll passage member and the second scroll passage member are arranged to be side by side in the direction along the central axis of the connecting shaft 230c. The exhaust gas in the first scroll passage member and the exhaust gas in the second scroll passage member are blown onto the outer periphery of the turbine wheel 230a. The flows of the exhaust gas discharged from the two scroll passage members are gathered (merged) when passing the turbine wheel 230a. With the twin-scroll-type scroll exhaust passage member, the path length of the independent exhaust passage member 264 is elongated. Due to this, it is possible to prevent the discharge of the exhaust gas from one combustion chamber 30 from being obstructed by the pressure of the exhaust gas discharged from another combustion chamber 30. It is therefore possible to prevent the decrease in the flow rate and pressure of the exhaust gas. The decrease in the output of the engine is prevented for this reason. Furthermore, because the decrease in the flow rate and pressure of the exhaust gas is prevented, the decrease in the rotation speed of the turbine wheel 230a is prevented. The decrease in the intake efficiency is prevented for this reason. When the decrease in the intake efficiency is prevented, the increase in the fuel consumption is prevented and the decrease in the output of the engine is prevented.

When the number of combustion chambers 30 is three or more, the exhaust gas discharged from two or more combustion chambers 30 flows in at least one of the first scroll passage member and the second scroll passage member. For example, when the number of combustion chambers 30 is four, only the exhaust gas discharged from two combustion chambers 30 flows in each scroll passage member. In this case, the exhaust gas discharged from the two combustion chambers 30 is gathered while the exhaust gas flows from the two combustion chambers 30 to the first scroll passage member. Similarly, the exhaust gas discharged from the two combustion chambers 30 is gathered while the exhaust gas flows from the remaining two combustion chambers 30 to the second scroll passage member. The upstream end of an exhaust passage member which gathers exhaust gas discharged from the two combustion chambers 30 may be provided inside the engine main body 20 or outside the engine main body 20.

A preferred embodiment of the present invention has been described. It should be noted that the present invention is not limited to the above-described embodiments and modifications, and various changes, substitutions, and alterations can be made herein without departing from the spirit and scope of the invention as defined by the appended claims. Further, modifications described below may be used in combination as needed. For example, the term "preferably" or "preferable" herein is non-exclusive and means "preferably/preferable, but not limited to."

In the above-described embodiment, the lower end 101c of the left catalyst cover 101 and the lower end 102c of the right catalyst cover 102 are separated from each other (see FIG. 4). However, the lower end of the left catalyst cover 101 and the lower end of the right catalyst cover 102 may be connected to each other. That is, the left catalyst cover 101 and the right catalyst cover 102 may be connected together as a single member. When the lower end of the left catalyst cover and the lower end of the right catalyst cover are connected to each other, the left catalyst cover is a portion leftward of the center C0 in the left-right direction of the motorcycle 1. The right catalyst cover is a portion rightward of the center C0 in the left-right direction of the motorcycle 1.

In the above-described embodiment, the front end 102a of the right catalyst cover 102 is formed by an edge of the plate-like member. However, the front end of the right catalyst cover 102 does not have to be an edge of a member as long as it is a part of the outline of the right catalyst cover 102 when viewed from the right. For example, suppose a right catalyst cover having a front end portion, at least a part of which is bent. In this case, the outline of the bent part viewed from the right forms a part of the front end of the right catalyst cover. In the above case, a front edge of a plate-like member forming the right catalyst cover is positioned rearward of the front end of the right catalyst cover.
The same applies to the front end 101a of the left catalyst cover 101.

In the embodiment above, the crankcase 21 and the cylinder body 22 are different members. Alternatively, the crankcase and the cylinder body may be integrally formed. In the embodiment above, the cylinder body 22, the cylinder head 23, and the head cover 24 are different members. Alternatively, two or three of the cylinder body, the cylinder head, and the head cover may be integrally formed. In the embodiment above, the crankcase 21 and the oil pan 26 are different members. Alternatively, the crankcase and the oil pan may be integrally formed.

In the embodiment above, the cross-sectional area of the main catalyst 62a cut along the direction orthogonal to the flow direction of the exhaust gas is circular. The cross-sectional shape of the main catalyst 62a, however, is not limited to circular. The cross-sectional shape of the main catalyst 62a may be elliptic and long in the left-right direction. In other words, the cross-sectional shape may be flat. The cross-sectional shape of the catalyst portion 62 is preferably analogous to the cross-sectional shape of the main catalyst 62a.
When the sub-catalyst 47 has a porous structure, this modification may be employed in the sub-catalyst 47.

In the embodiment above, the length Dc1 of the catalyst portion 62 is longer than the length Dc2 of the catalyst portion 62. In this regard, the length Dc1 of the catalyst portion 62 may be shorter than the length Dc2 of the catalyst portion 62. The length Dc1 is the length of the catalyst portion 62 along the flow direction of the exhaust gas. The length Dc2 is the maximum length of the catalyst portion 62 in the direction orthogonal to the flow direction of the exhaust gas.

The main catalyst 62a may include a plurality of catalysts provided to be close to one another. Each catalyst includes a base and a catalyst material. Providing a plurality of catalysts to be close to one another indicates the following state. That is to say, catalysts are close to one another in the sense that the distance between neighboring catalysts is short, rather than the length of each catalyst is short in the flow direction of the exhaust gas. The bases of the catalysts may be formed of the same or different materials. The catalyst materials of the catalysts may be the same or different noble metals.
This modification may be employed in the sub-catalyst 47.

In the embodiment above, the exhaust device 60 is arranged so that the catalyst portion 62 is disposed at a right part of the motorcycle 1. Alternatively, the exhaust device 60 may be arranged so that the catalyst portion 62 is disposed at a left part of the motorcycle 1. In this case, the muffler member 67 is also preferably disposed at a left part of the motorcycle 1. The exhaust device 60 may be arranged so that the central axis C1 of the catalyst portion 62 is provided at the center CO in the left-right direction of the motorcycle 1. Furthermore, the exhaust device 60 may be arranged so that the center of the upstream end and the center of the downstream end of the catalyst portion 62 are positioned on the respective sides of the center CO in the left-right direction of the motorcycle 1.

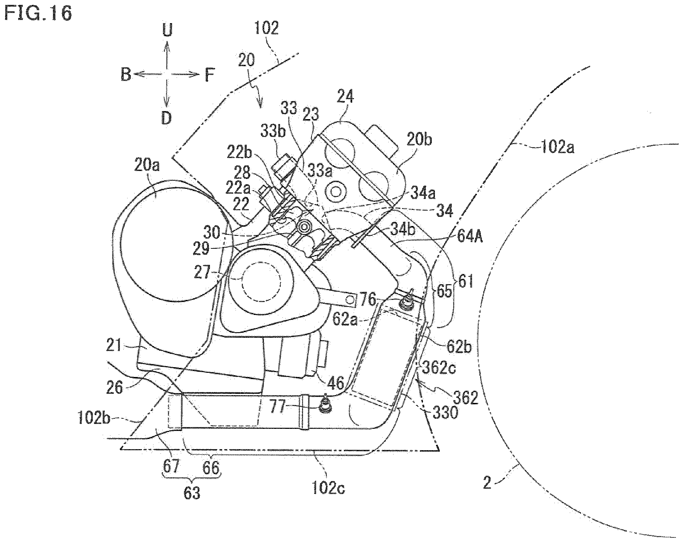

As shown in FIG. 16, at least a part of the outer surface of the cylindrical part 62b may be covered with a catalyst protector 330. In the catalyst protector 330, a part covering the outer surface of the cylindrical part 62b is termed a catalyst protector portion 362c. The catalyst protector portion 362c is included in a catalyst portion 362. A part of the catalyst protector 330 may be included in the upstream collective exhaust passage member 65. A part of the catalyst protector 330 may be included in the downstream collective exhaust passage member 66. The catalyst protector portion 362c may or may not be cylindrical in shape. When the catalyst protector portion 362c is provided, the heat keeping effect of the main catalyst 62a is improved. As a result, at the cold start of the engine unit, the time required to activate the deactivated main catalyst 62a is further shortened. Due to this, the exhaust gas purification performance of the main catalyst 62a is further improved. Furthermore, the catalyst protector portion 362c protects the cylindrical part 62b and the main catalyst 62a. Furthermore, the catalyst protector portion 362c improves the appearance.

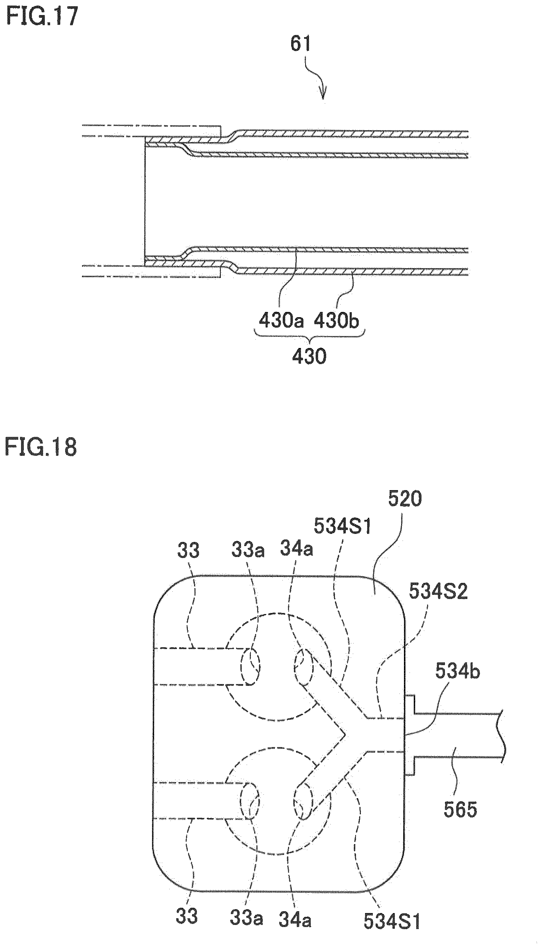

At least a part of the upstream exhaust passage member 61 may be formed of a multi-walled pipe. The multi-walled pipe is constituted by an inner pipe and at least one outer pipe covering the inner pipe. As shown in FIG. 17, the multi-walled pipe may be a double-walled pipe 430. The double-walled pipe 430 includes an inner pipe 430a and an outer pipe 430b. The both end portions of the inner pipe 430a are in contact with the both end portions of the outer pipe 430b. The inner pipe 430a and the outer pipe 430b may be in contact with each other at a part other than the both end portions. For example, the inner pipe 430a and the outer pipe 430b may be in contact with each other at a bended portion. The multi-walled pipe 430 restrains the decrease in the temperature of the exhaust gas in the upstream exhaust passage member 61. As a result, at the cold start of the engine unit 11, the time required to activate the deactivated main catalyst 62a is further shortened.

The exhaust device 60 may include two muffler members 67 for one catalyst portion 62. In other words, the exhaust device 60 may include two atmosphere discharge ports 67a for one catalyst portion 62. In this case, the downstream collective exhaust passage member 66 is branched into two. The two muffler members 67 are provided to be side by side in the up-down direction. Alternatively, the two muffler members 67 are disposed at a right part and a left part of the motorcycle 1, respectively.

In the embodiment above, the number of exhaust ports 34b is identical to the number of combustion chambers 30 in the engine main body 20. In this regard, when a plurality of combustion chamber exhaust ports 34a are provided for one combustion chamber 30, the number of exhaust ports 34b may be larger than the number of combustion chambers 30.

The number of exhaust ports 34b may be smaller than the number of combustion chambers 30. The number of exhaust ports 34b is at least one. In this case, the exhaust gas discharged from the combustion chambers 30 is gathered inside the engine main body 20. To be more specific, as shown in FIG. 18, an engine main body 520 includes a plurality of internal independent exhaust passage members 534S1 and an internal collective exhaust passage member 534S2. The plurality of internal independent exhaust passage members 534S1 are connected to the combustion chambers 30, respectively. The internal collective exhaust passage member 534S2 is connected to the downstream ends of the internal independent exhaust passage members 534S1. The internal collective exhaust passage member 534S2 gathers the exhaust gas discharged from the internal independent exhaust passage members 534S1. The exhaust port 534b is at the downstream end of the internal collective exhaust passage member 534S2. The internal collective exhaust passage member 534S2 is connected to the upstream end of the upstream collective exhaust passage member 565. A plurality of independent exhaust passage members 64 are not provided. According to this modification, the length of a path where only the exhaust gas discharged from one combustion chamber 30 passes is shortened. Due to this, the area of an internal surface of a passage member from the combustion chambers 30 to the catalyst portion 62 is decreased. Due to this, the heat capacity of the passage members from the combustion chambers 30 to the catalyst portion 62 is decreased. The temperature of the exhaust gas flowing into the catalyst portion 62 is therefore increased. As a result, at the cold start of the engine unit 11, the time required to activate the deactivated main catalyst 62a is shortened. Due to this, the exhaust gas purification performance of the main catalyst 62a is improved.

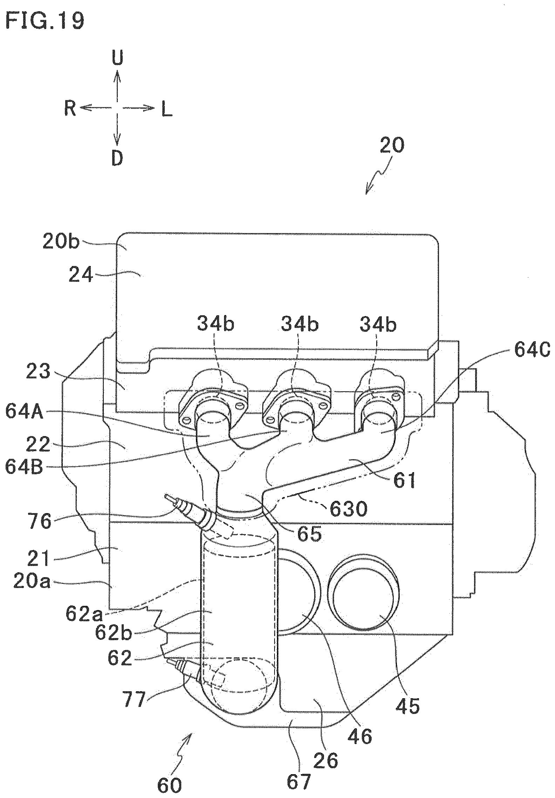

The engine unit 11 may be arranged such that the exhaust gas is cooled by coolant water in a passage member from the combustion chamber 30 to the catalyst portion 62. In other words, the engine unit 11 may include an exhaust gas cooling passage member in which coolant water for cooling the exhaust gas flows. For example, as shown in FIG. 19, at least a part of the exhaust gas cooling passage member 630 may be formed at the outer periphery of at least a part of the upstream collective exhaust passage member 65. Alternatively, for example, as shown in FIG. 19, at least a part of the exhaust gas cooling passage member 630 may be formed at the outer periphery of at least a part of each of the independent exhaust passage members 64. At least a part of the exhaust gas cooling passage member may be formed at the outer periphery of at least a part of each of the internal exhaust passage members 34. The coolant water flowing in the exhaust gas cooling passage member may be shared with or different from the coolant water for cooling the engine main body 20. The cooling of the exhaust gas may be carried out by means of a cooling medium other than water, instead of the coolant water. From the cold start of the engine unit 11 to a predetermined timing, the coolant water in the exhaust gas cooling passage member is preferably not circulated. In other words, the exhaust gas is preferably not to be cooled by the coolant water during this period. The predetermined timing is determined based on, for example, an elapsed time, the total rotation number of the crankshaft 27, or the temperature of the exhaust gas. According to this modification, because the exhaust gas is cooled by the coolant water, excessive increase in the temperature of the exhaust gas flowing into the catalyst portion 62 is prevented. It is therefore possible to prevent the deterioration of the main catalyst 62a due to excessive heating. Due to this, the exhaust gas purification performance of the main catalyst 62a is further improved. Furthermore, when at least a part of the exhaust gas cooling passage member is formed at the outer periphery of at least a part of the upstream collective exhaust passage member 65, the following effect is obtained. The exhaust gas cooling passage member is downsized when compared to cases where the exhaust gas cooling passage member is not provided at the outer periphery of the upstream collective exhaust passage member 65 but provided at the outer periphery of each of the independent exhaust passage members 64. The exhaust gas cooling passage member is downsized when compared with cases where the exhaust gas cooling passage member is not provided at the outer periphery of the upstream collective exhaust passage member 65 but provided at the outer periphery of each of the internal exhaust passage members 34. It is therefore possible to restrain the increase in size of the vehicle in the up-down direction and the front-rear direction.

An exhaust gas cooling passage member may be applied to the modification shown in FIG. 18. At least a part of the exhaust gas cooling passage member may be formed at the outer periphery of at least a part of the upstream collective exhaust passage member 565. At least a part of the exhaust gas cooling passage member may be formed at the outer periphery of at least a part of the internal collective exhaust passage member 534S2. At least a part of the exhaust gas cooling passage member may be formed at the outer periphery of at least a part of each of the internal independent exhaust passage members 534S1. According to this modification, because the exhaust gas is cooled by the coolant water, excessive increase in the temperature of the exhaust gas flowing into the catalyst portion 62 is prevented. It is therefore possible to prevent the deterioration of the main catalyst 62a due to excessive heating. Due to this, the exhaust gas purification performance of the main catalyst 62a is further improved. Furthermore, when at least a part of the exhaust gas cooling passage member is formed at the outer periphery of at least a part of the internal collective exhaust passage member 534S2, the following effect is obtained. The exhaust gas cooling passage member is downsized when compared to cases where the exhaust gas cooling passage member is not provided at the internal collective exhaust passage member 534S2 but provided at the outer periphery of each of the internal independent exhaust passage members 534S1. It is therefore possible to restrain the increase in size of the engine main body in the up-down direction and the front-rear direction. Due to this, it is possible to restrain the increase in size of the vehicle in the up-down direction and the front-rear direction.

The combustion chamber 30 may include a main combustion chamber and an auxiliary combustion chamber connected to the main combustion chamber. In this case, one combustion chamber of the present teaching is formed of the main combustion chamber and the auxiliary combustion chamber.

In the embodiment above, the engine main body 20 includes three combustion chambers 30. The number of combustion chambers 30 in the engine main body 20 may be two, four, or more than four. The number of combustion chambers 30 in the engine main body 20 may be one. In other words, the engine unit of the straddled vehicle in which the present teaching is employed may be a single-cylinder engine.

When the number of combustion chambers 30 is four or more, a plurality of catalyst portions 62 may be provided. Only the exhaust gas discharged from one or some of the combustion chambers 30 may be allowed to pass one catalyst portion 62. This arrangement will be explained with the assumption that the number of combustion chambers 30 is four. The exhaust device 60 includes a plurality of independent exhaust passage members, two upstream collective exhaust passage members, two catalyst portions, and two downstream exhaust passage members. The first upstream collective exhaust passage member gathers the exhaust gas discharged from the right two combustion chambers 30. The second upstream collective exhaust passage member gathers the exhaust gas discharged from the left two combustion chambers 30. The first catalyst portion is connected to the downstream end of the first upstream collective exhaust passage member and the upstream end of the first downstream exhaust passage member. The first catalyst portion is connected to the downstream end of the second upstream collective exhaust passage member and the upstream end of the second downstream exhaust passage member. Each of the first downstream exhaust passage member and the second downstream exhaust passage member has an atmosphere discharge port. In this case, a passage unit having two of the independent exhaust passage members and the first upstream collective exhaust passage member, and the first catalyst portion are equivalent to the upstream exhaust passage member and the catalyst portion of the present teaching, respectively. Meanwhile, a passage unit having the remaining two of the independent exhaust passage members and the second upstream collective exhaust passage member, and the second catalyst portion are equivalent to the upstream exhaust passage member and the catalyst portion of the present teaching, respectively.

When the number of combustion chambers 30 is four or more, the engine main body 20 may be a so-called V engine. For example, a V4 engine has four combustion chambers, and two combustion chambers are provided in a front side whereas the remaining two combustion chambers are provided in a rear side. The combustion chambers provided in the front part of the V engine are termed front combustion chambers. The front combustion chambers are side by side in the left-right direction. The combustion chambers provided in the rear part of the V engine are termed rear combustion chambers. The rear combustion chambers are side by side in the left-right direction. A cylinder hole forming a part of the front combustion chamber is termed a front cylinder hole. The direction of the central axis of the front cylinder hole is identical to the direction of the cylinder axial line Cy. Each front combustion chamber communicates with the internal exhaust passage member 34, the upstream exhaust passage member 61, the catalyst portion 62, and the downstream exhaust passage member 63. The front combustion chambers are encompassed in the plurality of combustion chambers of the present teaching. The rear combustion chamber is not encompassed in the plurality of combustion chambers of the present teaching.

When the engine main body 20 is a V engine, the exhaust gas discharged from the rear combustion chambers may be merged with the exhaust gas discharged from the front combustion chambers. For example, the downstream end of an exhaust passage member communicating with the rear combustion chambers may be connected to the upstream collective exhaust passage member 65. In this case, the exhaust gas discharged from the rear combustion chamber is purified by the main catalyst 62a. For example, the downstream end of an exhaust passage member communicating with the rear combustion chamber may be connected to the downstream collective exhaust passage member 66. In this case, a catalyst for purifying the exhaust gas discharged from the rear combustion chambers is provided in addition to the main catalyst 62a.

When the engine main body 20 is a V engine, the exhaust gas discharged from the rear combustion chambers may not be merged with the exhaust gas discharged from the front combustion chambers. In this case, a catalyst for purifying the exhaust gas discharged from the rear combustion chambers is provided in addition to the main catalyst 62a.

The inclination angle θcy of the cylinder axial line Cy with respect to the up-down direction when viewed in the left-right direction is 0 degrees or greater than 0 degrees, and 45 degrees or less than 45 degrees. However, the inclination angle θcy may be greater than 45 degrees. The inclination angle θcy is 90 degrees or less than 90 degrees. That is, the cylinder axial line Cy may be along the front-rear direction when viewed in the left-right direction.

In the embodiment above, the cylinder axial line Cy is inclined with a positive slope in the forward direction. Alternatively, the cylinder axial line Cy may be inclined with a negative slope in the forward direction. In other words, the cylinder portion 20b may be tilted rearward.

In the embodiment above, the positions of the downstream ends of the independent exhaust passage members 64 are substantially identical to one another. Alternatively, in the flow direction of the exhaust gas flowing in the upstream collective exhaust passage member 65, the downstream end of one independent exhaust passage member 64 may be downstream of the downstream end of another independent exhaust passage member 64. In this case, the upstream oxygen sensor 76 is preferably provided downstream of the downstream ends of all independent exhaust passage members 64.

In the embodiment above, the gas flowing in the exhaust path 69 during the driving of the engine unit 11 is only the exhaust gas discharged from the combustion chamber 30. The engine unit 11, however, may include a secondary air supply mechanism configured to supply air to the exhaust path 69. A known arrangement is employed for the specific arrangement of the secondary air supply mechanism. The secondary air supply mechanism may forcibly supply air to the exhaust path 69 by means of an air pump. The secondary air supply mechanism may take air into the exhaust path 69 by a negative pressure in the exhaust path 69. In this case, the secondary air supply mechanism includes a reed valve which is opened and closed in accordance with a pressure change in the exhaust path 69. When the secondary air supply mechanism is included, the upstream oxygen sensor 76 may be provided upstream or downstream of a position of air inflow.

The engine unit of the straddled vehicle in which the present teaching is employed may be an air-cooled engine. The engine unit of the straddled vehicle in which the present teaching is employed may be a natural air-cooled engine unit or a forced air-cooled engine unit.

The applications of the present teaching are not limited to motorcycles. The present teaching may be applied to a leaning vehicle which is not a motorcycle. The leaning vehicle is a vehicle including a vehicle body frame which is configured to lean rightward of the vehicle when turning right and lean leftward of the vehicle when turning left. The present teaching may be applied to a straddled vehicle which is not a motorcycle. The straddled vehicle indicates all types of vehicles on which a rider straddles a vehicle on a saddle. The straddled vehicle to which the present teaching is applicable encompasses vehicles such as motorcycles, tricycles, and four-wheeled buggies (ATVs: All Terrain Vehicles). The front wheel unit of the present teaching may include a plurality of front wheels. The rear wheel unit of the present teaching may include a plurality of rear wheels. The length in the left-right direction of the front wheel unit including a plurality of front wheels is the distance in the left-right direction between the leftmost end of the leftmost front wheel and the rightmost end of the rightmost front wheel.

Japanese Patent Application No. 2015-077744, which is one of the basic or priority applications of the subject application, is termed a basic application 1. The water cooling device 40 of the present specification is equivalent to a water cooler 40 in the basic application 1. The crankcase 21 of the present specification is equivalent to a crankcase main body 25 of the basic application 1. The internal intake passage member 33 of the present specification is equivalent to a structure forming an intake passage 33 in the basic application 1. The internal exhaust passage member 34 of the present specification is equivalent to a structure forming an exhaust path 34 in the basic application 1. The branched intake passage member 51 of the present specification is equivalent to a structure forming a branched intake passage 51 in the basic application 1. The main catalyst 62a of the present specification is equivalent to a catalyst 68 in the basic application 1. The independent exhaust passage member 64A of the present specification is equivalent to a structure forming a first exhaust passage 65 (independent exhaust passage 65) in the basic application 1. The part of the independent exhaust passage member 64B of the present specification, the part also functioning as the second exhaust passage member 56B, is equivalent to a structure forming an independent exhaust path 66A in the basic application 1. The independent exhaust passage member 64C of the present specification is equivalent to a structure forming a third exhaust path 67 (independent exhaust path 67) in the basic application 1. The upstream exhaust passage member 61 of the present specification is equivalent to a structure forming an upstream exhaust path 61 in the basic application 1. The downstream exhaust passage member 66 of the present specification is equivalent to a structure forming a downstream exhaust path 63 in the basic application 1. It is noted that the terms in the present specification may be equivalent to different terms in the basic application 1 from the terms above.

In the specification of the present teaching, the phrase that the upstream collective exhaust passage member 65 merges the exhaust gas discharged from the three independent exhaust passage members 64 indicates that the exhaust gas discharged from the three independent exhaust passage members 64 can be merged. However, the exhaust gas discharged from the three independent exhaust passage members 64 may not be mixed. As described above, the combustion process is carried out at different timings in the three combustion chambers 30. Due to this, the exhaust gas discharged from the three combustion chambers 30 may not be mixed in some cases.

In this specification, an "end" of a component indicates a leading end of the component or a part which forms the outline of the component when the component is viewed in one direction. Meanwhile, an "end portion" of a component indicates a part which includes an "end" of the component and its surroundings.

In this specification, a passage member indicates walls and the like which form a path by surrounding the path. A path indicates a space through which a target passes. The exhaust passage member indicates walls or the like which form the exhaust path by surrounding the exhaust path. The exhaust path indicates a space through which exhaust gas passes.

In this specification, the path length of any part of the exhaust path 69 indicates the length of a line passing the center of the exhaust path. Furthermore, the path length in the expansion chamber in the muffler member 67 is the length of the path connecting the center of the inflow port of the expansion chamber with the center of the outflow port of the expansion chamber in the shortest distance.

In this specification, an inclination angle of a linear line A with respect to a direction B indicates a smaller angle formed by the linear line A and the direction B.

In this specification, a direction along a direction A is not limited to a direction in parallel to the direction A. The direction along the direction A includes a direction tilted by +45 to -45 degrees with respect to the direction A. This definition is applied to cases where a linear line is along the direction A. The direction A does not indicate any specific direction. The direction A may be the horizontal direction or the front-rear direction.

In this specification, when a component A and a component B are side by side in a direction X, the following case is indicated. The component A and the component B are provided to be on a linear line along the direction X. The component A and the component B may or may not be arranged so that a linear line in parallel to the direction X passes through the components.

In this specification, when a component A is provided forward of a component B, the following case is indicated. The component A is provided in front of a plane which passes the frontmost end of the component B and is orthogonal to the front-rear direction. The component A and the component B may or may not be arranged so that a linear line in parallel to the front-rear direction passes through the components. This definition is applicable to directions other than the front-rear direction. (that is to say, this applies to the directions other than "forward of", such as "rearward of", "below", leftward of", and "rightward of".) Furthermore, this definition is applicable not only to components but also to a part of a component, a linear line, and a plane.

In this specification, when a component A is provided in front of a component B, the entirety of the component A is provided in front of a part of the front surface of the component B, which faces the component A. In this regard, the component A and the component B are arranged so that a linear line in parallel to the front-rear direction passes through the components. Furthermore, when viewed in the front-rear direction, the component B at least partially overlaps the entire component A. In regard to this definition, when a part of the front surface of the component B, which faces the component A, is the frontmost end of the component B, the component A is provided forward of the component B. When a part of the front surface of the component B, which faces the component A, is not the frontmost end of the component B, the component A may or may not be provided forward of the component B. This definition is applicable to directions other than the front-rear direction. (That is to say, this applies to the directions other than "in front of", such as "behind", "straight below", to the left of", and "to the right of".) Furthermore, this definition is applicable not only to components but also to a part of a component, a linear line, and a plane. The front surface of the component B indicates a surface which is visible when the component B is viewed from the front side. Depending on the shape of the component B, the front surface of the component B may be formed of a plurality of planes, rather than a single continuous plane.

In this specification, when a component A is provided in front of a component B when viewed in the left-right direction, the entirety of the component A is provided in front of the front surface of the component B when viewed in the left-right direction. In this regard, when viewed in the left-right direction, the component A and the component B are arranged so that a linear line in parallel to the front-rear direction passes through the components. In three dimensions, the component A and the component B may or may not be arranged so that a linear line in parallel to the front-rear direction passes through the components. This definition is applicable to directions other than the front-rear direction. (That is to say, this applies to the directions other than "in front of", such as "behind", "straight below", to the left of", and "to the right of".) Furthermore, this definition is applicable not only to components but also to a part of a component, a linear line, and a plane.

In this specification, when a component A is provided between a component B and a component C when viewed in the left-right direction, the following state is indicated. To begin with, a case where the component B and the component C are side by side in the front-rear direction when viewed in the left-right direction will be explained. A line segment, which is the uppermost one of line segments connecting points on the outline of the component B with points on the outline of the component C when viewed in the left-right direction, is referred to as a line segment LU. Furthermore, a line segment, which is the lowermost one of line segments connecting the points on the outline of the component B with the points on the outline of the component C when viewed in the left-right direction, is referred to as a line segment LD. The state above is a state in which, when viewed in the left-right direction, the component A is in a quadrangular region having the line segments LU and LD as two sides and does not overlap the components B and C. Subsequently, a case where the component B and the component C are side by side in the up-down direction when viewed in the left-right direction will be explained. A line segment, which is the leftmost one of line segments connecting points on the outline of the component B with points on the outline of the component C when viewed in the left-right direction, is referred to as a line segment LL. Furthermore, a line segment, which is the rightmost one of line segments connecting points on the outline of the component B with points on the outline of the component C when viewed in the left-right direction, is referred to as a line segment line segment LR. The state is a state in which, when viewed in the left-right direction, the component A is in a quadrangular region having the line segments LL and LR as two sides and does not overlap the components B and C. This definition is applicable to cases where the viewing direction is not the left-right direction. Furthermore, this definition is applicable not only to components but also to a part of a component, a linear line, and a plane.

### [Reference Signs List]

1 motorcycle (straddled vehicle)
2 front wheel unit
3 rear wheel unit
4 vehicle body frame
11 engine unit
20, 520 engine main body
20a crankcase member
20b cylinder portion
21 crankcase
22a cylinder hole
27 crankshaft
30 combustion chamber
34 internal exhaust passage member
34b, 534b exhaust port
45 oil filter
47U (47) upstream sub-catalyst
47D (47) downstream sub-catalyst
60 exhaust device
61 upstream exhaust passage member
62, 362 catalyst portion
62a main catalyst
62b cylindrical part
63 downstream exhaust passage member
64, 64A, 64B, 264 independent exhaust passage member
65, 265, 565 upstream collective exhaust passage member
66 downstream collective exhaust passage member
67 muffler member
67a atmosphere discharge port
69 exhaust path
100 vehicle body cover
101 left catalyst cover
102, 202 right catalyst cover
101a, 102a, 202a front end
101b, 102b rear end
362c catalyst protector portion
430 double-walled pipe (multi-walled pipe)
430a inner pipe
430b outer pipe
534S1 internal independent exhaust passage member
534S2 internal collective exhaust passage member

## Claims

1. A straddled vehicle comprising:
a vehicle body frame (4);
an engine unit (11) supported by the vehicle body frame (4);
a front wheel unit (2) including at least one front wheel and provided in front of the engine unit (11) in a vehicle front-rear direction when viewed in a vehicle left-right direction, a length in the left-right direction of the front wheel unit (2) being shorter than a maximum length in the left-right direction of the engine unit (11); and
a vehicle body cover (100) covering at least a part of the vehicle body frame (4) and supported by the vehicle body frame (4),
the engine unit (11) including:
an engine main body (20, 520) including at least one combustion chamber (30); and
an exhaust device (60) connected to a front portion of the engine main body (20, 520), exhaust gas discharged from the at least one combustion chamber (30) flowing through the exhaust device (60), the exhaust device (60) including an atmosphere discharge port (67a) through which the exhaust gas is discharged to the atmosphere,
the exhaust device (60) including:
a catalyst portion (62, 362) including a main catalyst configured to purify the exhaust gas discharged from the at least one combustion chamber (30) most in at least one exhaust path from the at least one combustion chamber (30) to the atmosphere discharge port (67a), a length of the catalyst portion (62, 362) in a flow direction of the exhaust gas being identical to a length of the main catalyst in the flow direction of the exhaust gas, the catalyst portion (62, 362) being provided below an upper end of the front wheel unit (2) in a vehicle up-down direction, at least a part of the catalyst portion (62, 362) provided between the engine main body (20, 520) and the front wheel unit (2) when viewed in the left-right direction; and
an upstream exhaust passage member (61) connecting the catalyst portion (62, 362) to the engine main body (20, 520),
the vehicle body cover (100) including:
a left catalyst cover (101) covering at least a part of the catalyst portion (62, 362) when viewed from left in the left-right direction, at least a part of a front end (101a) of the left catalyst cover (101) provided between the catalyst portion (62, 362) and the front wheel unit (2) when viewed from the left in the left-right direction; and
a right catalyst cover (102, 202) covering at least a part of the catalyst portion (62, 362) when viewed from right in the left-right direction, at least a part of a front end (102a, 202a) of the right catalyst cover (102, 202) provided between the catalyst portion (62, 362) and the front wheel unit (2) when viewed from the right in the left-right direction,
**characterized in that**
the vehicle body cover (100) is designed so that a maximum distance in the left-right direction between the front end (101a) of the left catalyst cover (101) and the front end (102a, 202a) of the right catalyst cover (102, 202) is shorter than a maximum length in the left-right direction of the engine main body (20, 520), and
the exhaust device (60) and the vehicle body cover (100) are designed so that when the vehicle body cover (100), the engine main body (20, 520), and the exhaust device (60) are viewed from the front in the front-rear direction, a half or more of the catalyst portion (62, 362) is exposed between the front end (101a) of the left catalyst cover (101) and the front end (102a, 202a) of the right catalyst cover (102, 202).

2. The straddled vehicle according to claim 1, wherein the exhaust device (60) and the vehicle body cover (100) are configured so that when the vehicle body cover (100), the engine main body (20, 520), the exhaust device (60), and the front wheel unit (2) are viewed from the front in the front-rear direction, at least a part of the catalyst portion (62, 362) is exposed between the front end (101a) of the left catalyst cover (101) and a left end of the front wheel unit (2), or between the front end (102a, 202a) of the right catalyst cover (102, 202) and a right end of the front wheel unit (2).

3. The straddled vehicle according to claim 1 or 2, wherein the exhaust device (60) is configured so that when viewed in the front-rear direction, a center of an upstream end of the catalyst portion (62, 362) and a center of a downstream end of the catalyst portion (62, 362) are both positioned to the left or right of a plane passing a center in the left-right direction of the front wheel unit (2).

4. The straddled vehicle according to any one of claims 1 to 3, wherein the catalyst portion (62, 362) is disposed so that the flow direction of the exhaust gas flowing in the catalyst portion (62, 362) is along the up-down direction.

5. The straddled vehicle according to any one of claims 1 to 4, wherein
the engine main body (20, 520) has at least one cylinder hole (22a) forming a part of the at least one combustion chamber (30), respectively, and
the engine main body (20, 520) is disposed so that a central axis (Cy) of the at least one cylinder hole (22a) is along the up-down direction.

6. The straddled vehicle according to any one of claims 1 to 5, wherein
the engine main body (20, 520) includes a crankshaft (27) having a central axis (Cr) which is along the left-right direction, and
the catalyst portion (62, 362) is provided forward of the central axis (Cr) of the crankshaft (27) in the front-rear direction.

7. The straddled vehicle according to claim 6, wherein
the engine main body (20, 520) includes:
a crankcase member (20a) provided at a lower part of the engine main body (20, 520) and including the crankshaft (27); and
a cylinder portion (20b) connected to an upper end portion of the crankcase member (20a) and including the at least one combustion chamber (30), and
at least a part of the catalyst portion (62, 362) is provided in front of the crankcase member (20a) in the front-rear direction.

8. The straddled vehicle according to claim 6 or 7, wherein,
the engine main body (20, 520) has at least one cylinder hole (22a) forming a part of the at least one combustion chamber (30), respectively, and
when viewed in the left-right direction, at least a part of the catalyst portion (62, 362) is provided in front of a linear line in the front-rear direction, the linear line (Lp) being orthogonal to a central axis (Cy) of a cylinder hole (22a) and passing the central axis (Cr) of the crankshaft (27).

9. The straddled vehicle according to any one of claims 1 to 8, wherein the vehicle body cover (100) is designed so that in a freely-selected horizontal plane passing the catalyst portion (62, 362), a distance in the left-right direction between a rear end of the left catalyst cover (101) and a rear end of the right catalyst cover (102, 202) is longer than a distance in the left-right direction between the front end (101a) of the left catalyst cover (101) and the front end (102a, 202a) of the right catalyst cover (102, 202).

10. The straddled vehicle according to any one of claims 1 to 9, wherein the catalyst portion (62, 362) includes:
a cylindrical part (62b) which houses the main catalyst and is connected to a downstream end of the upstream exhaust passage member (61); and
a catalyst protector portion (362c) covering at least a part of an outer surface of the cylindrical part (62b).

11. The straddled vehicle according to any one of claims 1 to 10, wherein the exhaust device (60) includes:
a downstream exhaust passage member (63) connected to a downstream end of the catalyst portion (62, 362) and having the atmosphere discharge port (67a); and
at least one downstream sub-catalyst (47D) provided in the downstream exhaust passage member (63) and configured to purify the exhaust gas.

12. The straddled vehicle according to any one of claims 1 to 11, wherein
the engine main body (20, 520) includes at least one internal exhaust passage member (34) connecting the at least one combustion chamber (30) to the upstream exhaust passage member (61), and
the exhaust device (60) includes at least one upstream sub-catalyst (47U) configured to purify the exhaust gas, the upstream sub-catalyst (47U) being provided in either one or both of the at least one internal exhaust passage member (34) and the upstream exhaust passage member (61).

13. The straddled vehicle according to any one of claims 1 to 12, wherein at least a part of the upstream exhaust passage member (61) is formed by a multi-walled pipe (430) including an inner pipe (430a) and at least one outer pipe (430b) covering the inner pipe (430a).

14. The straddled vehicle according to any one of claims 1 to 13, wherein
the engine main body (20, 520) is provided with an oil filter (45) at a front portion of the engine main body (20, 520), and
the exhaust device (60) and the oil filter (45) are configured so that at least a part of the oil filter (45) is exposed when the exhaust device (60) and the oil filter (45) are viewed from the front in the front-rear direction.

15. The straddled vehicle according to any one of claims 1 to 14, wherein the number of catalyst portions (62, 362) is one.

16. The straddled vehicle according to any one of claims 1 to 14, wherein,
the number of the at least one combustion chamber (30) is four or more;
the straddled vehicle includes a plurality of the catalyst portions (62, 362); and
the exhaust device (60) is configured so that only the exhaust gas discharged from one or some of the combustion chambers (30) passes corresponding one of the catalyst portions (62, 362).

## Patentansprüche

1. Ein Grätsch-Fahrzeug, das folgende Merkmale aufweist:
einen Fahrzeugkörperrahmen (4);
eine Motoreinheit (11), die durch den Fahrzeugkörperrahmen (4) getragen wird;
eine Vorderradeinheit (2) mit zumindest einem Vorderrad, die vor der Motoreinheit (11) in einer Fahrzeugrichtung von vorne nach hinten vorgesehen ist, bei Betrachtung in einer Fahrzeugrichtung von links nach rechts, wobei eine Länge der Vorderradeinheit (2) in der Richtung von links nach rechts kürzer ist als eine maximale Länge der Motoreinheit (11) in der Richtung von links nach rechts; und
eine Fahrzeugkörperabdeckung (100), die zumindest einen Teil des Fahrzeugkörperrahmens (4) bedeckt und durch den Fahrzeugkörperrahmen (4) getragen wird,
wobei die Motoreinheit (11) folgende Merkmale aufweist:
einen Motorhauptkörper (20, 520) mit zumindest einer Verbrennungskammer (30); und
eine Ausstoßvorrichtung (60), die mit einem Vorderabschnitt des Motorhauptkörpers (20, 520) verbunden ist, wobei Abgas, das aus der zumindest einen Verbrennungskammer (30) abgegeben wird, durch die Ausstoßvorrichtung (60) strömt, wobei die Ausstoßvorrichtung (60) eine Atmosphärenabgabeöffnung (67a) aufweist, durch die das Abgas an die Atmosphäre abgegeben wird,
wobei die Ausstoßvorrichtung (60) folgende Merkmale aufweist:
einen Katalysatorabschnitt (62, 362) mit einem Hauptkatalysator, der ausgebildet ist, um das Abgas, das aus der zumindest einen Verbrennungskammer (30) abgegeben wird, am meisten in zumindest einem Ausstoßweg von der zumindest einen Verbrennungskammer (30) zu der Atmosphärenabgabeöffnung (67a) zu reinigen, wobei eine Länge des Katalysatorabschnitts (62, 362) in einer Strömungsrichtung des Abgases identisch ist zu einer Länge des Hauptkatalysators in der Strömungsrichtung des Abgases, wobei der Katalysatorabschnitt (62, 362) unterhalb eines oberen Endes der Vorderradeinheit (2) in einer Fahrzeugrichtung von oben nach unten vorgesehen ist, wobei zumindest ein Teil des Katalysatorabschnitts (62, 362) bei Betrachtung in der Richtung von links nach rechts zwischen dem Motorhauptkörper (20, 520) und der Vorderradeinheit (2) vorgesehen ist; und
ein stromaufwärtiges Ausstoßdurchgangsbauteil (61), das den Katalysatorabschnitt (62, 362) mit dem Motorhauptkörper (20, 520) verbindet,
wobei die Fahrzeugkörperabdeckung (100) folgende Merkmale aufweist:
eine linke Katalysatorabdeckung (101), die bei Betrachtung von links in der Richtung von links nach rechts zumindest einen Teil des Katalysatorabschnitts (62, 362) bedeckt, wobei zumindest ein Teil eines vorderen Endes (101a) der linken Katalysatorabdeckung (101) bei Betrachtung von links in der Richtung von links nach rechts zwischen dem Katalysatorabschnitt (62, 362) und der Vorderradeinheit (2) vorgesehen ist; und
eine rechte Katalysatorabdeckung (102, 202), die bei Betrachtung von rechts in der Richtung von links nach rechts zumindest einen Teil des Katalysatorabschnitts (62, 362) bedeckt, wobei zumindest ein Teil eines vorderen Endes (102a, 202a) der rechten Katalysatorabdeckung (102, 202) bei Betrachtung von rechts in der Richtung von links nach rechts zwischen dem Katalysatorabschnitt (62, 362) und der Vorderradeinheit (2) vorgesehen ist,
**dadurch gekennzeichnet, dass**:
die Fahrzeugkörperabdeckung (100) so entworfen ist, dass eine maximale Entfernung in der Richtung von links nach rechts zwischen dem vorderen Ende (101a) der linken Katalysatorabdeckung (101) und dem vorderen Ende (102a, 202a) der rechten Katalysatorabdeckung (102, 202) kürzer ist als eine maximale Länge des Motorhauptkörpers (20, 520) in der Richtung von links nach rechts, und
die Ausstoßvorrichtung (60) und die Fahrzeugkörperabdeckung (100) so entworfen sind, dass, wenn die Fahrzeugkörperabdeckung (100), der Motorhauptkörper (20, 520) und die Ausstoßvorrichtung (60) von vorne in der Richtung von vorne nach hinten betrachtet werden, eine Hälfte oder mehr des Katalysatorabschnitts (62, 362) zwischen dem vorderen Ende (101a) der linken Katalysatorabdeckung (101) und dem vorderen Ende (102a, 202a) der rechten Katalysatorabdeckung (102, 202) freiliegt.

2. Das Grätsch-Fahrzeug gemäß Anspruch 1, bei dem die Ausstoßvorrichtung (60) und die Fahrzeugkörperabdeckung (100) so ausgebildet sind, dass, wenn die Fahrzeugkörperabdeckung (100), der Motorhauptkörper (20, 520), die Ausstoßvorrichtung (60) und die Vorderradeinheit (2) von vorne in der Richtung von vorne nach hinten betrachtet werden, zumindest ein Teil des Katalysatorabschnitts (62, 362) zwischen dem vorderen Ende (101a) der linken Katalysatorabdeckung (101) und einem linken Ende der Vorderradeinheit (2) freiliegt, oder zwischen dem vorderen Ende (102a, 202a) der rechten Katalysatorabdeckung (102, 202) und einem rechten Ende der Vorderradeinheit (2).

3. Das Grätsch-Fahrzeug gemäß Anspruch 1 oder 2, bei dem die Ausstoßvorrichtung (60) so ausgebildet ist, das bei Betrachtung in der Richtung von vorne nach hinten eine Mitte eines stromaufwärtigen Endes des Katalysatorabschnitts (62, 362) und eine Mitte eines stromabwärtigen Endes des Katalysatorabschnitts (62, 362) beide links oder rechts von einer Ebene positioniert sind, die eine Mitte der Vorderradeinheit (2) in der Richtung von links nach rechts passiert.

4. Das Grätsch-Fahrzeug gemäß einem der Ansprüche 1 bis 3, bei dem der Katalysatorabschnitt (62, 362) so angeordnet ist, dass die Strömungsrichtung des Abgases, das in dem Katalysatorabschnitt (62, 362) strömt, entlang der Richtung von oben nach unten verläuft.

5. Das Grätsch-Fahrzeug gemäß einem der Ansprüche 1 bis 4, bei dem:
der Motorhauptkörper (20, 520) zumindest ein Zylinderloch (22a) aufweist, das jeweils einen Teil der zumindest einen Verbrennungskammer (30) bildet, und
der Motorhauptkörper (20, 520) so angeordnet ist, dass eine Mittelachse (Cy) des zumindest einen Zylinderlochs (22a) entlang der Richtung von oben nach unten verläuft.

6. Das Grätsch-Fahrzeug gemäß einem der Ansprüche 1 bis 5, bei dem:
der Motorhauptkörper (20, 520) eine Kurbelwelle (27) mit einer Mittelachse (Cr) aufweist, die entlang der Richtung von links nach rechts verläuft, und
der Katalysatorabschnitt (62, 362) vor der Mittelachse (Cr) der Kurbelwelle (27) in der Richtung von vorne nach hinten vorgesehen ist.

7. Das Grätsch-Fahrzeug gemäß Anspruch 6, bei dem:
der Motorhauptkörper (20, 520) folgende Merkmale aufweist:
ein Kurbelwellenbauteil (20a), das an einem unteren Teil des Motorhauptkörpers (20, 520) vorgesehen ist und die Kurbelwelle (27) umfasst; und
einen Zylinderabschnitt (20b), der mit einem oberen Endabschnitt des Kurbelwellenbauteils (20a) verbunden ist und die zumindest eine Verbrennungskammer (30) aufweist, und
zumindest ein Teil des Katalysatorabschnitts (62, 362) vor dem Kurbelwellenbauteil (20a) in der Richtung von vorne nach hinten vorgesehen ist.

8. Das Grätsch-Fahrzeug gemäß Anspruch 6 oder 7, bei dem:
der Motorhauptkörper (20, 520) zumindest ein Zylinderloch (22a) aufweist, das jeweils einen Teil der zumindest einen Verbrennungskammer (30) bildet, und
bei Betrachtung in der Richtung von links nach rechts zumindest ein Teil des Katalysatorabschnitts (62, 362) vor einer linearen Linie in der Richtung von vorne nach hinten vorgesehen ist, wobei die lineare Linie (Lp) orthogonal zu einer Mittelachse (Cy) eines Zylinderlochs (22a) ist und die Mittelachse (Cr) der Kurbelwelle (27) passiert.

9. Das Grätsch-Fahrzeug gemäß einem der Ansprüche 1 bis 8, bei dem die Fahrzeugkörperabdeckung (100) so entworfen ist, dass in einer frei ausgewählten horizontalen Ebene, die den Katalysatorabschnitt (62, 362) passiert, eine Entfernung in der Richtung von links nach rechts zwischen einem hinteren Ende der linken Katalysatorabdeckung (101) und einem hinteren Ende der rechten Katalysatorabdeckung (102, 202) länger ist als eine Entfernung in der Richtung von links nach rechts zwischen dem vorderen Ende (101a) der linken Katalysatorabdeckung (101) und dem vorderen Ende (102a, 202a) der rechten Katalysatorabdeckung (102, 202).

10. Das Grätsch-Fahrzeug gemäß einem der Ansprüche 1 bis 9, bei dem der Katalysatorabschnitt (62, 362) folgende Merkmale aufweist:
einen zylindrischen Teil (62b), der den Hauptkatalysator unterbringt und mit einem stromabwärtigen Ende des stromaufwärtigen Ausstoßdurchgangsbauteils (61) verbunden ist; und
einen Katalysatorschutzabschnitt (362c), der zumindest einen Teil einer äußeren Oberfläche des zylindrischen Teils (62b) bedeckt.

11. Das Grätsch-Fahrzeug gemäß einem der Ansprüche 1 bis 10, bei dem die Ausstoßvorrichtung (60) folgende Merkmale aufweist:
ein stromabwärtiges Ausstoßdurchgangsbauteil (63), das mit einem stromabwärtigen Ende des Katalysatorabschnitts (62, 362) verbunden ist und die Atmosphärenabgabeöffnung (67a) aufweist; und
zumindest einen stromabwärtigen Teil-Katalysator (47D), der in dem stromabwärtigen Ausstoßdurchgangsbauteil (63) vorgesehen ist und ausgebildet ist, um das Abgas zu reinigen.

12. Das Grätsch-Fahrzeug gemäß einem der Ansprüche 1 bis 11, bei dem:
der Motorhauptkörper (20, 520) zumindest ein internes Ausstoßdurchgangsbauteil (34) aufweist, das die zumindest eine Verbrennungskammer (30) mit dem stromaufwärtigen Ausstoßdurchgangsbauteil (61) verbindet, und
die Ausstoßvorrichtung (60) zumindest einen stromaufwärtigen Teil-Katalysator (47U) aufweist, der ausgebildet ist, um das Abgas zu reinigen, wobei der stromaufwärtige Teilkatalysator (47U) in entweder einem oder beiden des zumindest einen internen Ausstoßdurchgangsbauteils (34) und des stromaufwärtigen Ausstoßdurchgangsbauteils (61) vorgesehen ist.

13. Das Grätsch-Fahrzeug gemäß einem der Ansprüche 1 bis 12, bei dem zumindest ein Teil des stromaufwärtigen Ausstoßdurchgangsbauteils (61) durch ein mehrwandiges Rohr (430) gebildet ist, das ein inneres Rohr (430a) und zumindest ein äußeres Rohr (430b), das das innere Rohr (430a) bedeckt, aufweist.

14. Das Grätsch-Fahrzeug gemäß einem der Ansprüche 1 bis 13, bei dem:
der Motorhauptkörper (20, 520) mit einem Ölfilter (45) an einem Vorderabschnitt des Motorhauptkörpers (20, 520) versehen ist und
die Ausstoßvorrichtung (60) und das Ölfilter (45) so ausgebildet sind, dass zumindest ein Teil des Ölfilters (45) freiliegt, wenn die Ausstoßvorrichtung (60) und das Ölfilter (45) von vorne in der Richtung von vorne nach hinten betrachtet werden.

15. Das Grätsch-Fahrzeug gemäß einem der Ansprüche 1 bis 14, bei dem die Anzahl von Katalysatorabschnitten (62, 362) eins beträgt.

16. Das Grätsch-Fahrzeug gemäß einem der Ansprüche 1 bis 14, bei dem:
die Anzahl der zumindest einen Verbrennungskammer (30) vier oder mehr beträgt;
das Grätsch-Fahrzeug eine Mehrzahl der Katalysatorabschnitte (62, 362) aufweist; und
die Ausstoßvorrichtung (60) so ausgebildet ist, dass nur das Abgas, das aus einer oder einigen der Verbrennungskammern (30) abgegeben wird, einen entsprechenden der Katalysatorabschnitte (62, 362) passiert.

## Revendications

1. Véhicule à selle, comprenant:
un châssis de carrosserie de véhicule (4);
une unité de moteur (11) supportée par le châssis de carrosserie de véhicule (4);
une unité de roue avant (2) comportant au moins une roue avant et prévue à l'avant de l'unité de moteur (11) dans une direction avant-arrière du véhicule lorsque vue dans la direction gauche-droite du véhicule, une longueur dans la direction gauche-droite de l'unité de roue avant (2) étant plus courte qu'une longueur maximale dans la direction gauche-droite de l'unité de moteur (11); et
un couvercle de carrosserie de véhicule (100) recouvrant au moins une partie du châssis de carrosserie de véhicule (4) et supporté par le châssis de carrosserie de véhicule (4),
l'unité de moteur (11) comportant:
un corps principal de moteur (20, 520) comportant au moins une chambre de combustion (30); et
un dispositif d'échappement (60) connecté à une partie avant du corps principal de moteur (20, 520), les gaz d'échappement étant évacués de l'au moins une chambre de combustion (30) en s'écoulant à travers le dispositif d'échappement (60), le dispositif d'échappement (60) comportant un orifice d'évacuation à l'atmosphère (67a) à travers lequel les gaz d'échappement sont évacués à l'atmosphère,
le dispositif d'échappement (60) comportant:
une partie de catalyseur (62, 362) comportant un catalyseur principal configuré pour purifier les gaz d'échappement évacués de l'au moins une chambre de combustion (30) pour la plus grande partie sur au moins un trajet d'échappement allant de l'au moins une chambre de combustion (30) à l'orifice d'évacuation à l'atmosphère (67a), une longueur de la partie de catalyseur (62, 362) dans une direction d'écoulement des gaz d'échappement étant identique à une longueur du catalyseur principal dans la direction d'écoulement des gaz d'échappement, la partie de catalyseur (62, 362) étant prévue au-dessous d'une extrémité supérieure de l'unité de roue avant (2) dans une direction de haut en bas du véhicule, au moins une portion de la partie de catalyseur (62, 362) étant prévue entre le corps principal de moteur (20, 520) et l'unité de roue avant (2) lorsque vue dans la direction gauche-droite; et
un élément de passage d'échappement amont (61) connectant la partie de catalyseur (62, 362) au corps principal de moteur (20, 520),
le couvercle de carrosserie de véhicule (100) comportant:
un couvercle de catalyseur gauche (101) couvrant au moins une portion de la partie de catalyseur (62, 362) lorsque vu de la gauche dans la direction gauche-droite, au moins une partie d'une extrémité avant (101a) du couvercle de catalyseur gauche (101) étant prévue entre la partie de catalyseur (62, 362) et l'unité de roue avant (2) lorsque vue de la gauche dans la direction gauche-droite; et
un couvercle de catalyseur droit (102, 202) recouvrant au moins une portion de la partie de catalyseur (62, 362) lorsque vu de la droite dans la direction gauche-droite, au moins une partie d'une extrémité avant (102a, 202a) du couvercle de catalyseur droit (102, 202) étant prévue entre la partie de catalyseur (62, 362) et l'unité de roue avant (2) lorsque vue de la droite dans la direction gauche-droite,
**caractérisé par le fait que**
le couvercle de carrosserie de véhicule (100) est conçu de sorte qu'une distance maximale dans la direction gauche-droite entre l'extrémité avant (101a) du couvercle de catalyseur gauche (101) et l'extrémité avant (102a, 202a) du couvercle de catalyseur droit (102, 202) soit inférieure à une longueur maximale dans la direction gauche-droite du corps principal de moteur (20, 520), et
le dispositif d'échappement (60) et le couvercle de la carrosserie de véhicule (100) sont conçus de sorte que, lorsque le couvercle de carrosserie de véhicule (100), le corps principal de moteur (20, 520) et le dispositif d'échappement (60) sont vus de l'avant dans la direction avant-arrière, une moitié ou plus de la partie de catalyseur (62, 362) soit exposée entre l'extrémité avant (101a) du couvercle de catalyseur gauche (101) et l'extrémité avant (102a, 202a) du couvercle de catalyseur droit (102, 202).

2. Véhicule à selle selon la revendication 1, dans lequel le dispositif d'échappement (60) et le couvercle de carrosserie de véhicule (100) sont configurés de sorte que, lorsque le couvercle de carrosserie de véhicule (100), le corps principal de moteur (20, 520), le dispositif d'échappement (60) et l'unité de roue avant (2) sont vus de l'avant dans la direction avant-arrière, au moins une portion de la partie de catalyseur (62, 362) soit exposée entre l'extrémité avant (101a) du couvercle de catalyseur gauche (101) et une extrémité gauche de l'unité de roue avant (2) ou entre l'extrémité avant (102a, 202a) du couvercle de catalyseur droit (102, 202) et une extrémité droite de l'unité de roue avant (2).

3. Véhicule à selle selon la revendication 1 ou 2, dans lequel le dispositif d'échappement (60) est configuré de sorte que, lorsque vus dans la direction avant-arrière, un centre d'une extrémité amont de la partie de catalyseur (62, 362) et un centre d'une extrémité aval de la partie de catalyseur (62, 362) soient tous deux positionnés à gauche ou à droite d'un plan passant par un centre dans la direction gauche-droite de l'unité de roue avant (2).

4. Véhicule à selle selon l'une quelconque des revendications 1 à 3, dans lequel la partie de catalyseur (62, 362) est disposée de sorte que la direction de circulation des gaz d'échappement s'écoulant dans la partie de catalyseur (62, 362) se trouve dans la direction de haut en bas.

5. Véhicule à selle selon l'une quelconque des revendications 1 à 4, dans lequel
le corps principal de moteur (20, 520) présente au moins un trou de cylindre (22a) faisant partie respectivement de l'au moins une chambre de combustion (30), et
le corps principal de moteur (20, 520) est disposé de sorte qu'un axe central (Cy) de l'au moins un trou de cylindre (22a) se trouve dans la direction de haut en bas.

6. Véhicule à selle selon l'une quelconque des revendications 1 à 5, dans lequel
le corps principal de moteur (20, 520) comporte un vilebrequin (27) présentant un axe central (Cr) qui se trouve dans la direction gauche-droite, et
la partie de catalyseur (62, 362) est prévue à l'avant de l'axe central (Cr) du vilebrequin (27) dans la direction avant-arrière.

7. Véhicule à selle selon la revendication 6, dans lequel le corps principal de moteur (20, 520) comporte:
un élément de carter (20a) prévu dans une partie inférieure du corps principal de moteur (20, 520) et comportant le vilebrequin (27); et
une partie de cylindre (20b) connectée à une partie d'extrémité supérieure de l'élément de carter (20a) et comportant l'au moins une chambre de combustion (30), et
au moins une portion de la partie de catalyseur (62, 362) est prévue devant l'élément de carter (20a) dans la direction avant-arrière.

8. Véhicule à selle selon la revendication 6 ou 7, dans lequel
le corps principal de moteur (20, 520) présente au moins un trou de cylindre (22a) faisant partie respectivement de l'au moins une chambre de combustion (30), et
lorsque vue dans la direction gauche-droite, au moins une portion de la partie de catalyseur (62, 362) est prévue devant une ligne linéaire dans la direction avant-arrière, la ligne linéaire (Lp) étant orthogonale à un axe central (Cy) d'un trou de cylindre (22a) et passant par l'axe central (Cr) du vilebrequin (27).

9. Véhicule à selle selon l'une quelconque des revendications 1 à 8, dans lequel le couvercle de carrosserie de véhicule (100) est conçu de sorte que, dans un plan horizontal choisi librement et passant par la partie de catalyseur (62, 362), une distance dans la direction gauche-droite entre une extrémité arrière du couvercle de catalyseur gauche (101) et une extrémité arrière du couvercle de catalyseur droit (102, 202) soit plus longue qu'une distance dans la direction gauche-droite entre l'extrémité avant (101a) du couvercle de catalyseur gauche (101) et l'extrémité avant (102a, 202a) du couvercle de catalyseur droit (102, 202).

10. Véhicule à selle selon l'une quelconque des revendications 1 à 9, dans lequel la partie de catalyseur (62, 362) comporte:
une partie cylindrique (62b) qui abrite le catalyseur principal et est connectée à une extrémité aval de l'élément de passage d'échappement amont (61); et
une partie de protecteur de catalyseur (362c) recouvrant au moins une partie d'une surface extérieure de la partie cylindrique (62b).

11. Véhicule à selle selon l'une quelconque des revendications 1 à 10, dans lequel le dispositif d'échappement (60) comporte:
un élément de passage d'échappement aval (63) connecté à une extrémité aval de la partie de catalyseur (62, 362) et présentant l'orifice de décharge à l'atmosphère (67a); et
au moins un sous-catalyseur aval (47D) prévu dans l'élément de passage d'échappement aval (63) et configuré pour purifier les gaz d'échappement.

12. Véhicule à selle selon l'une quelconque des revendications 1 à 11, dans lequel
le corps principal de moteur (20, 520) comporte au moins un élément de passage d'échappement interne (34) connectant l'au moins une chambre de combustion (30) à l'élément de passage d'échappement amont (61), et
le dispositif d'échappement (60) comporte au moins un sous-catalyseur amont (47U) configuré pour purifier les gaz d'échappement, le sous-catalyseur amont (47U) étant prévu soit dans l'un, soit dans les deux parmi l'au moins un élément de passage d'échappement interne (34) et l'élément de passage d'échappement amont (61).

13. Véhicule à selle selon l'une quelconque des revendications 1 à 12, dans lequel au moins une partie de l'élément de passage d'échappement amont (61) est formée par un tuyau à parois multiples (430) comportant un tuyau intérieur (430a) et au moins un tuyau extérieur (430b) recouvrant le tuyau intérieur (430a).

14. Véhicule à selle selon l'une quelconque des revendications 1 à 13, dans lequel
le corps principal de moteur (20, 520) est pourvu d'un filtre à huile (45) dans une partie avant du corps principal de moteur (20, 520), et
le dispositif d'échappement (60) et le filtre à huile (45) sont configurés de sorte qu'au moins une partie du filtre à huile (45) soit exposée lorsque le dispositif d'échappement (60) et le filtre à huile (45) sont vus de l'avant dans la direction avant-arrière.

15. Véhicule à selle selon l'une quelconque des revendications 1 à 14, dans lequel le nombre de parties de catalyseur (62, 362) est égal à un.

16. Véhicule à selle selon l'une quelconque des revendications 1 à 14, dans lequel,
le nombre de l'au moins une chambre de combustion (30) est de quatre ou plus;
le véhicule à selle comporte une pluralité de parties de catalyseur (62, 362); et
le dispositif d'échappement (60) est configuré de sorte que seuls les gaz d'échappement évacués d'une ou de certaines des chambres de combustion (30) passent par l'une correspondante des parties de catalyseur (62, 362).
